# EUROPEAN PATENT APPLICATION

(11) **EP 4 266 763 A1**
(43) Date of publication of application: **25.10.2023**
(21) Application number: 21918701.0
(22) Date of filing: 18.01.2021
(51) Int. Cl.: H04W 52/02, H04W 76/28

(54) **COMMUNICATION METHOD AND APPARATUS**

(71) Applicant: Huawei Technologies Co., Ltd., Shenzhen, Guangdong 518129 (CN)
(72) Inventor: HUANG, Wenwen, Shenzhen, Guangdong 518129 (CN); TIE, Xiaolei, Shenzhen, Guangdong 518129 (CN); ZHANG, Zhanzhan, Shenzhen, Guangdong 518129 (CN)
(74) Representative: Gill Jennings & Every LLP
(86) International application number: PCT/CN2021/072567
(87) International publication number: WO 2022/151501

(57) **Abstract**

A communication method and apparatus are provided, to improve flexibility of performing PDCCH monitoring by a terminal device, and reduce power consumption of the terminal device. According to the method, in a dynamic SS set group switching mechanism, the terminal device may alternatively not perform PDCCH monitoring on some monitoring occasions corresponding to an SS set in a monitoring state, to improve the flexibility of performing PDCCH monitoring by the terminal device, and overcome a power consumption waste caused by unaligned monitoring occasions corresponding to different SS sets.

## Description

### TECHNICAL FIELD

This application relates to the field of communication technologies, and in particular, to a communication method and apparatus.

### BACKGROUND

In a communication system, power consumption of a terminal device is an important aspect of user experience. A 3rd generation partnership project (3rd generation partnership project, 3GPP) also considers optimization of the power consumption of the terminal device as an important topic to improve the user experience.

One of functions of a physical downlink control channel (physical downlink control channel, PDCCH) is to carry scheduling information of uplink/downlink data. Therefore, the terminal device may periodically perform PDCCH monitoring to determine whether scheduling occurs. If detecting the scheduling information on the PDCCH, the terminal device may receive, based on the scheduling information, downlink data of a network device over a physical downlink shared channel (physical downlink shared channel, PDSCH), or send uplink data to a network device over a physical uplink shared channel (physical uplink shared channel, PUSCH). When there is no service transmission between the network device and the terminal device, the network device does not send the scheduling information, but if the terminal device still needs to perform PDCCH monitoring, a power consumption waste of the terminal device is caused.

In the communication system, a PDCCH monitoring occasion (PDCCH monitoring occasion) may be determined based on a parameter configuration of a search space set (search space set, SS set). Usually, the network device may configure at least one SS set for a downlink (downlink, DL) bandwidth part (bandwidth part, BWP). The terminal device may determine the PDCCH monitoring occasions based on parameter configurations of these SS sets.

If the PDCCH monitoring occasions are dense (for example, a PDCCH periodicity of the SS set is one slot), the terminal device needs to frequently perform PDCCH monitoring (for example, the terminal device performs PDCCH monitoring in each slot). Once there is to-be-transmitted data, the network device may quickly perform scheduling to the terminal device. Therefore, the dense PDCCH monitoring occasions help reduce a service scheduling delay, but the power consumption of the terminal device is increased because the terminal device frequently performs PDCCH monitoring. If the PDCCH monitoring occasions are sparse (for example, a value of a PDCCH periodicity of the SS set is large), the terminal device may perform PDCCH monitoring once at intervals of several slots. This can reduce the power consumption of the terminal device, but increase a service scheduling delay.

Therefore, how the terminal device flexibly performs PDCCH monitoring to reduce the power consumption of the terminal device is an urgent problem to be resolved by a person skilled in the communication field.

### SUMMARY

This application provides a communication method and apparatus, to improve flexibility of performing PDCCH monitoring by a terminal device, and reduce power consumption of the terminal device.

According to a first aspect, an embodiment of this application provides a communication method. The method is implemented based on a dynamic SS set group switching mechanism. The method is applied to a terminal device. Optionally, the method may be performed by the terminal device, or may be performed by a component such as a chip, a processor, or a chip system in the terminal device. The following specifically describes the method by using an example in which the method is performed by the terminal device. The method includes the following steps.

The terminal device determines a plurality of monitoring occasions corresponding to a first SS set in a first SS set group in an active BWP of a first serving cell, where the plurality of monitoring occasions corresponding to the first SS set are used by the terminal device to perform PDCCH monitoring; when a first monitoring occasion corresponding to the first SS set is outside a first monitoring range, determines not to perform PDCCH monitoring on the first monitoring occasion; and when a second monitoring occasion corresponding to the first SS set is within the first monitoring range, performs PDCCH monitoring on the second monitoring occasion, where the first monitoring occasion is included in the plurality of monitoring occasions corresponding to the first SS set, and the second monitoring occasion is included in the plurality of monitoring occasions corresponding to the first SS set.

According to the method, in the dynamic SS set group switching mechanism, the terminal device may alternatively not perform PDCCH monitoring on some monitoring occasions corresponding to an SS set in a monitoring state, to improve flexibility of performing PDCCH monitoring by the terminal device, and overcome a power consumption waste caused by unaligned monitoring occasions corresponding to different SS sets.

In a possible design, the terminal device may determine the first monitoring range based on a monitoring occasion corresponding to a reference SS set.

In this design, the terminal device may determine the first monitoring range, so that the terminal device may determine, by determining whether a monitoring occasion corresponding to the first SS set is within the first monitoring range, whether to perform PDCCH monitoring on the monitoring occasion.

In a possible design, the reference SS set is configured by a network device.

In a possible design, when the first SS set group includes a plurality of SS sets, the plurality of SS sets include the first SS set; and the reference SS set is determined based on configuration parameters corresponding to the plurality of SS sets, and the configuration parameter includes at least one of the following: a PDCCH monitoring periodicity, a PDCCH monitoring pattern within a slot, duration, and an SS set index.

Optionally, the reference SS set may be a virtual SS set determined based on the configuration parameters corresponding to the plurality of SS sets; or may be one selected from the plurality of SS sets.

For example, when the reference SS set is the virtual SS set, the configuration parameter of the reference SS set may meet at least one of the following conditions: a PDCCH monitoring periodicity of the reference SS set is greater than or equal to a maximum value of PDCCH monitoring periodicities of the plurality of SS sets in the first SS set group; a quantity of symbols in a PDCCH monitoring pattern within a slot of the reference SS set is less than or equal to a minimum value of a quantity of symbols in the PDCCH monitoring pattern within the slot of the plurality of SS sets in the first SS set group; and duration of the reference SS set is less than or equal to a minimum value of duration of the plurality of SS sets in the first SS set group.

For example, when the reference SS set is the one selected from the first SS set group, the reference SS set may meet at least one of the following conditions:
a largest PDCCH monitoring periodicity in the first SS set group;
a minimum quantity of symbols in the PDCCH monitoring pattern within the slot in the first SS set group;
minimum duration in the first SS set group; and
a smallest or largest SS set index in the first SS set group.

In a possible design, when the first serving cell belongs to a first serving cell group, the reference SS set is determined based on a configuration parameter corresponding to an SS set that is in a monitoring state and that is in an active BWP of a reference serving cell in the first serving cell group, and the configuration parameter includes at least one of the following: a PDCCH monitoring periodicity, a PDCCH monitoring pattern within a slot, duration, and an SS set index. For a specific determining process, refer to the foregoing design. Details are not described herein again.

In a possible design, when the first serving cell belongs to a first serving cell group, the reference SS set is all SS sets that are in a monitoring state and that are in an active BWP of a reference serving cell in the first serving cell.

In a possible design, when the first serving cell belongs to a first serving cell group, the reference SS set is determined based on a configuration parameter corresponding to an SS set that is in a monitoring state and that is in an active BWP of an active serving cell in the first serving cell group, and the configuration parameter includes at least one of the following: a PDCCH monitoring periodicity, a PDCCH monitoring pattern within a slot, duration, and an SS set index. For a specific determining process, refer to the foregoing design. Details are not described herein again.

In the foregoing several designs, flexibility of determining the reference SS set by a communication system can be improved.

In a possible design, the reference serving cell is configured by a network device.

In a possible design, the reference serving cell is determined based on a parameter of the active serving cell in the first serving cell group, and the parameter includes at least one of the following: a subcarrier spacing SCS of an active BWP of the serving cell and an index of the serving cell; or the parameter includes at least one of the following: SCSs of an active BWP and an inactive BWP of the serving cell, and an index of the serving cell.

In a possible design, the reference serving cell is determined based on parameters of the active serving cell and an inactive serving cell in the first serving cell group, and the parameter includes at least one of the following: SCSs of an active BWP and an inactive BWP of the serving cell, and an index of the serving cell.

In the foregoing several designs, flexibility of determining the reference serving cell by the communication system can be improved.

In a possible design, the first monitoring range is:
a symbol on which the monitoring occasion corresponding to the reference SS set is located; or
a slot in which the monitoring occasion corresponding to the reference SS set is located; or
a symbol on which the monitoring occasion corresponding to the reference SS set is located and a first specified quantity of adjacent symbols; or
a slot in which the monitoring occasion corresponding to the reference SS set is located and a second specified quantity of adj acent slots; or
a symbol on which the monitoring occasion corresponding to the reference SS set is located and adjacent first specified duration; or
a slot in which the monitoring occasion corresponding to the reference SS set is located and adjacent second specified duration.

In this design, flexibility of determining the first monitoring range can be improved.

In a possible design, when the first serving cell belongs to the first serving cell group, and the first serving cell group further includes a second serving cell, the terminal device may further perform the following steps.

The terminal device determines a plurality of monitoring occasions corresponding to a second SS set in a second SS set group in an active BWP of the second serving cell, where the plurality of monitoring occasions corresponding to the second SS set are used by the terminal device to perform PDCCH monitoring; when a third monitoring occasion corresponding to the second SS set is outside the first monitoring range, determines not to perform PDCCH monitoring on the third monitoring occasion; and when a fourth monitoring occasion corresponding to the second SS set is within the first monitoring range, performs PDCCH monitoring on the fourth monitoring occasion, where the third monitoring occasion is included in the plurality of monitoring occasions corresponding to the second SS set, and the fourth monitoring occasion is included in the plurality of monitoring occasions corresponding to the second SS set.

In this design, the terminal device may not perform PDCCH monitoring on some monitoring occasions in each serving cell in the first serving cell group, to overcome a power consumption waste caused by unaligned monitoring occasions corresponding to different SS sets in different serving cells in a same serving cell group.

In a possible design, the terminal device receives a first indication from the network device, where the first indication indicates not to perform PDCCH monitoring on the first monitoring occasion, and the terminal device may perform the foregoing method based on the first indication.

In this design, the terminal device may not perform PDCCH monitoring on some monitoring occasions based on the indication of the network device.

In a possible design, the terminal device may further receive a second indication from the network device, and perform PDCCH monitoring based on the second indication and a third SS set group. In this way, the terminal device may perform SS set group switching based on the second indication of the network device, where
the second indication indicates the terminal device to perform SS set group switching on an active BWP of a serving cell in which DCI is located; and the DCI carries the second indication, and the first serving cell is the serving cell in which the DCI is located; or
the second indication indicates the terminal device to perform SS set group switching on an active BWP of a serving cell in which a PDSCH or a PUSCH scheduled by using DCI is located; and the DCI carries the second indication, and the first serving cell is the serving cell in which the PDSCH or the PUSCH scheduled by using the DCI is located; or
when the first serving cell belongs to the first serving cell group, the second indication indicates the terminal device to perform SS set group switching on an active BWP of a serving cell group in which DCI is located; and the DCI carries the second indication, and the first serving cell group is the serving cell group in which the DCI is located; or
when the first serving cell belongs to the first serving cell group, the second indication indicates the terminal device to perform SS set group switching on an active BWP of a serving cell group in which a PDSCH or a PUSCH scheduled by using DCI is located; and the DCI carries the second indication, and the first serving cell group is the serving cell group in which the PDSCH or the PUSCH scheduled by using the DCI is located; or
the second indication includes at least one field, and each field corresponds to one serving cell; and each field indicates the terminal device to perform SS set group switching on an active BWP of the corresponding serving cell; or
the second indication includes at least one field, and each field corresponds to one serving cell group; and each field indicates the terminal device to perform SS set group switching on an active BWP of the corresponding serving cell group.

In a possible design, the first SS set is a user-specific search space set USS; or the first SS set is a user-specific search space set USS or a type 3 Type3-PDCCH common search space set CSS.

In a possible design, a non-monitored PDCCH is a PDCCH scrambled by using a dedicated radio network temporary identifier RNTI of the terminal device.

According to a second aspect, an embodiment of this application provides a communication method. The method is implemented based on a PDCCH skipping monitoring mechanism. The method is applied to a terminal device. Optionally, the method may be performed by the terminal device, or may be performed by a component such as a chip, a processor, or a chip system in the terminal device. The following specifically describes the method by using an example in which the method is performed by the terminal device. The method includes the following steps.

The terminal device determines a plurality of monitoring occasions corresponding to the first SS set; receives a first indication from a network device, where the first indication indicates a periodic time window for the terminal device to skip PDCCH monitoring; determines a start location of the periodic time window based on a symbol or a slot on/in which the first indication is located; when a first monitoring occasion corresponding to the first SS set is within the periodic time window, determines not to perform PDCCH monitoring on the first monitoring occasion; and when a second monitoring occasion corresponding to the first SS set is outside the periodic time window, performs PDCCH monitoring on the second monitoring occasion, where the first monitoring occasion and the second monitoring occasion are included in the plurality of monitoring occasions corresponding to the first SS set.

According to the method, in the PDCCH-based PDCCH skipping monitoring mechanism, the terminal device may periodically skip the PDCCH monitoring based on the periodic time window, to improve flexibility of performing PDCCH monitoring by the terminal device, overcome a power consumption waste caused by unaligned monitoring occasions corresponding to different SS sets, and also reduce signaling overheads.

In a possible design, the first indication further indicates a quantity of the periodic time windows.

In this design, the terminal device may obtain an effective quantity from the first indication, and after completing the skipping of the PDCCH monitoring in the effective quantity of the periodic time windows, the terminal device automatically ends the periodic skipping of the PDCCH monitoring, and resumes the normal PDCCH monitoring.

In a possible design, the terminal device may further receive a second indication from the network device, where the second indication indicates that the periodic time window is invalid. Alternatively, the terminal device may further receive a third indication from the network device, where the third indication indicates a quantity of the periodic time windows.

In this design, when an end condition is met, the terminal device may end the periodic skipping of the PDCCH monitoring based on the indication of the network device, and resume the normal PDCCH monitoring.

In a possible design, the first indication further indicates a serving cell or a serving cell group in which the PDCCH monitoring is skipped; or the first indication further indicates an active BWP in which the PDCCH monitoring is skipped.

In a possible design, the start location of the periodic time window is offset by specified duration from a location of the symbol or the slot on/in which the first indication is located. The specified duration is effective time of the first indication, and may be configured by the network device.

In a possible design, the first SS set is a user-specific search space set USS; or the first SS set is a user-specific search space set USS or a Type3-PDCCH common search space set CSS.

In a possible design, a non-monitored PDCCH is a PDCCH scrambled by using a dedicated radio network temporary identifier RNTI of the terminal device.

According to a third aspect, an embodiment of this application provides a communication apparatus, used in a terminal device. The apparatus includes:
a communication unit, configured to receive and send a signal; and
a processing unit, configured to: determine a plurality of monitoring occasions corresponding to a first SS set in a first SS set group in an active BWP of a first serving cell, where the plurality of monitoring occasions corresponding to the first SS set are used by the terminal device to perform PDCCH monitoring; when a first monitoring occasion corresponding to the first SS set is outside a first monitoring range, determine not to perform PDCCH monitoring on the first monitoring occasion; and when a second monitoring occasion corresponding to the first SS set is within the first monitoring range, perform PDCCH monitoring on the second monitoring occasion by using the communication unit, where the first monitoring occasion is included in the plurality of monitoring occasions corresponding to the first SS set, and the second monitoring occasion is included in the plurality of monitoring occasions corresponding to the first SS set.

In a possible design, the processing unit is further configured to:
determine the first monitoring range based on a monitoring occasion corresponding to a reference SS set.

In a possible design, the reference SS set is configured by a network device.

In a possible design, when the first SS set group includes a plurality of SS sets, the plurality of SS sets include the first SS set; and the reference SS set is determined based on configuration parameters corresponding to the plurality of SS sets, and the configuration parameter includes at least one of the following: a PDCCH monitoring periodicity, a PDCCH monitoring pattern within a slot, duration, and an SS set index; or
when the first serving cell belongs to a first serving cell group, the reference SS set is determined based on a configuration parameter corresponding to an SS set that is in a monitoring state and that is in an active BWP of a reference serving cell in the first serving cell group, and the configuration parameter includes at least one of the following: a PDCCH monitoring periodicity, a PDCCH monitoring pattern within a slot, duration, and an SS set index; or
when the first serving cell belongs to a first serving cell group, the reference SS set is all SS sets that are in a monitoring state and that are in an active BWP of a reference serving cell in the first serving cell; or
when the first serving cell belongs to a first serving cell group, the reference SS set is determined based on a configuration parameter corresponding to an SS set that is in a monitoring state and that is in an active BWP of an active serving cell in the first serving cell group, and the configuration parameter includes at least one of the following: a PDCCH monitoring periodicity, a PDCCH monitoring pattern within a slot, duration, and an SS set index.

In a possible design, the reference serving cell is configured by a network device.

In a possible design, the reference serving cell is determined based on a parameter of the active serving cell in the first serving cell group, and the parameter includes at least one of the following: a subcarrier spacing SCS of an active BWP of the serving cell and an index of the serving cell; or the parameter includes at least one of the following: SCSs of an active BWP and an inactive BWP of the serving cell, and an index of the serving cell; or
the reference serving cell is determined based on parameters of the active serving cell and an inactive serving cell in the first serving cell group, and the parameter includes at least one of the following: SCSs of an active BWP and an inactive BWP of the serving cell, and an index of the serving cell.

In a possible design, the first monitoring range is:
a symbol on which the monitoring occasion corresponding to the reference SS set is located; or
a slot in which the monitoring occasion corresponding to the reference SS set is located; or
a symbol on which the monitoring occasion corresponding to the reference SS set is located and a first specified quantity of adjacent symbols; or
a slot in which the monitoring occasion corresponding to the reference SS set is located and a second specified quantity of adjacent slots; or
a symbol on which the monitoring occasion corresponding to the reference SS set is located and adjacent first specified duration; or
a slot in which the monitoring occasion corresponding to the reference SS set is located and adjacent second specified duration.

In a possible design, when the first serving cell belongs to the first serving cell group, and the first serving cell group further includes a second serving cell, the processing unit is further configured to:
determine a plurality of monitoring occasions corresponding to a second SS set in a second SS set group in an active BWP of the second serving cell, where the plurality of monitoring occasions corresponding to the second SS set are used by the terminal device to perform PDCCH monitoring; when a third monitoring occasion corresponding to the second SS set is outside the first monitoring range, determine not to perform PDCCH monitoring on the third monitoring occasion; and when a fourth monitoring occasion corresponding to the second SS set is within the first monitoring range, perform PDCCH monitoring on the fourth monitoring occasion by using the communication unit, where the third monitoring occasion is included in the plurality of monitoring occasions corresponding to the second SS set, and the fourth monitoring occasion is included in the plurality of monitoring occasions corresponding to the second SS set.

In a possible design, the processing unit is further configured to:
receive a first indication from the network device by using the communication unit, where the first indication indicates not to perform PDCCH monitoring on the first monitoring occasion.

In a possible design, the processing unit is further configured to:
receive a second indication from the network device by using the communication unit, and perform PDCCH monitoring based on the second indication and a third SS set group, where
the second indication indicates the terminal device to perform SS set group switching on an active BWP of a serving cell in which DCI is located; and the DCI carries the second indication, and the first serving cell is the serving cell in which the DCI is located; or
the second indication indicates the terminal device to perform SS set group switching on an active BWP of a serving cell in which a PDSCH or a PUSCH scheduled by using DCI is located; and the DCI carries the second indication, and the first serving cell is the serving cell in which the PDSCH or the PUSCH scheduled by using the DCI is located; or
when the first serving cell belongs to the first serving cell group, the second indication indicates the terminal device to perform SS set group switching on an active BWP of a serving cell group in which DCI is located; and the DCI carries the second indication, and the first serving cell group is the serving cell group in which the DCI is located; or
when the first serving cell belongs to the first serving cell group, the second indication indicates the terminal device to perform SS set group switching on an active BWP of a serving cell group in which a PDSCH or a PUSCH scheduled by using DCI is located; and the DCI carries the second indication, and the first serving cell group is the serving cell group in which the PDSCH or the PUSCH scheduled by using the DCI is located; or
the second indication includes at least one field, and each field corresponds to one serving cell; and each field indicates the terminal device to perform SS set group switching on an active BWP of the corresponding serving cell; or
the second indication includes at least one field, and each field corresponds to one serving cell group; and each field indicates the terminal device to perform SS set group switching on an active BWP of the corresponding serving cell group.

In a possible design, the first SS set is a user-specific search space set USS; or the first SS set is a user-specific search space set USS or a Type3-PDCCH common search space set CSS.

In a possible design, a non-monitored PDCCH is a PDCCH scrambled by using a dedicated radio network temporary identifier RNTI of the terminal device.

According to a fourth aspect, an embodiment of this application provides a communication apparatus, used in a terminal device. The apparatus includes:
a communication unit, configured to receive and send a signal; and
a processing unit, configured to: determine a plurality of monitoring occasions corresponding to a first SS set; receive a first indication from a network device by using the communication unit, where the first indication indicates a periodic time window for the terminal device to skip PDCCH monitoring; determine a start location of the periodic time window based on a symbol or a slot on/in which the first indication is located; when a first monitoring occasion corresponding to the first SS set is within the periodic time window, determine not to perform PDCCH monitoring on the first monitoring occasion; and when a second monitoring occasion corresponding to the first SS set is outside the periodic time window, perform PDCCH monitoring on the second monitoring occasion by using the communication unit, where the first monitoring occasion and the second monitoring occasion are included in the plurality of monitoring occasions corresponding to the first SS set.

In a possible design, the first indication further indicates a quantity of the periodic time windows.

In a possible design, the processing unit is further configured to:
receive a second indication from the network device by using the communication unit, where the second indication indicates that the periodic time window is invalid; or receive a third indication from the network device by using the communication unit, where the third indication indicates a quantity of the periodic time windows.

In a possible design, the first indication further indicates a serving cell or a serving cell group in which the PDCCH monitoring is skipped; or the first indication further indicates an active BWP in which the PDCCH monitoring is skipped.

In a possible design, the start location of the periodic time window is offset by specified duration from a location of the symbol or the slot on/in which the first indication is located.

In a possible design, the first SS set is a user-specific search space set USS; or the first SS set is a user-specific search space set USS or a Type3-PDCCH common search space set CSS.

In a possible design, a non-monitored PDCCH is a PDCCH scrambled by using a dedicated radio network temporary identifier RNTI of the terminal device.

According to a fifth aspect, an embodiment of this application provides a terminal device, including at least one processing element and at least one storage element. The at least one storage element is configured to store a program and data, and the at least one processing element is configured to perform the method according to any one of the foregoing aspects of this application.

According to a sixth aspect, an embodiment of this application further provides a communication system, including the terminal device and the network device that are configured to perform the method according to any one of the aspects of this application.

According to a seventh aspect, an embodiment of this application further provides a computer program. When the computer program is run on a computer, the computer is enabled to perform the method according to any one of the foregoing aspects.

According to an eighth aspect, an embodiment of this application further provides a computer storage medium. The computer storage medium stores a computer program. When the computer program is executed by a computer, the computer is enabled to perform the method according to any one of the foregoing aspects.

According to a ninth aspect, an embodiment of this application further provides a chip. The chip is configured to read a computer program stored in a memory, to perform the method according to any one of the foregoing aspects.

According to a tenth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete device.

### BRIEF DESCRIPTION OF DRAWINGS

FIG. 1A is a schematic diagram of a monitoring occasion corresponding to an SS set according to an embodiment of this application;
FIG. 1B is a schematic diagram of a monitoring occasion corresponding to an SS set according to an embodiment of this application;
FIG. 2 is a schematic diagram of an architecture of a communication system according to an embodiment of this application;
FIG. 3A is a schematic diagram of a DRX cycle according to an embodiment of this application;
FIG. 3B is a schematic diagram of behavior of a terminal device in a DRX process according to an embodiment of this application;
FIG. 4 is a schematic diagram of a PDCCH-based WUS mechanism according to an embodiment of this application;
FIG. 5 is a schematic diagram of a secondary cell dormant mechanism according to an embodiment of this application;
FIG. 6 is a schematic diagram of a PDCCH-based PDCCH skipping monitoring mechanism according to an embodiment of this application;
FIG. 7 is a schematic diagram of a dynamic SS set group switching mechanism according to an embodiment of this application;
FIG. 8 is a schematic diagram of a dynamic SS set group switching mechanism in a multi-carrier scenario according to an embodiment of this application;
FIG. 9 is a flowchart of a communication method according to an embodiment of this application;
FIG. 10 is a flowchart of determining effective time by a network device according to an embodiment of this application;
FIG. 11 is a schematic diagram of a manner of determining a first monitoring range according to an embodiment of this application;
FIG. 12 is a schematic diagram of PDCCH skipping monitoring according to an embodiment of this application;
FIG. 13 is a schematic diagram of another PDCCH skipping monitoring according to an embodiment of this application;
FIG. 14 is a flowchart of another communication method according to an embodiment of this application;
FIG. 15 is a schematic diagram of PDCCH skipping monitoring according to an embodiment of this application;
FIG. 16 is a schematic diagram of PDCCH skipping monitoring according to an embodiment of this application;
FIG. 17 is a schematic diagram of a structure of a communication apparatus according to an embodiment of this application; and
FIG. 18 is a schematic diagram of a structure of a terminal device according to an embodiment of this application.

### DESCRIPTION OF EMBODIMENTS

Embodiments of this application provide a communication method and apparatus, to improve flexibility of performing PDCCH monitoring by a terminal device, and reduce power consumption of the terminal device. The method and the apparatus are based on a same technical concept. Because a problem-resolving principle of the method is similar to that of the apparatus, mutual reference may be made to implementations of the apparatus and the method. Repeated parts are not described in detail again.

The following explains and describes some terms in this application, to facilitate understanding of a person skilled in the art.
(1) Network device: A network device is a device that connects a terminal device to a wireless network in a communication system. As a node in a radio access network, the network device may also be referred to as a base station, or may be referred to as a radio access network (radio access network, RAN) node (or device).

Currently, some examples of the network device are: a gNB, a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (Enterprise LTE Discrete Spectrum Aggregation, eLTE-DSA) base station, and the like.

In addition, in a network structure, the network device may include a central unit (central unit, CU) node and a distributed unit (distributed unit, DU) node. In this structure, protocol layers of an eNB in a long term evolution (long term evolution, LTE) system are split, where functions of some protocol layers are centrally controlled by a CU, functions of some or all of remaining protocol layers are distributed in DUs, and the CU centrally controls the DUs.

(2) Terminal device: A terminal device is a device that provides voice and/or data connectivity for a user. The terminal device may also be referred to as user equipment (user equipment, UE), a mobile station (mobile station, MS), a mobile terminal (mobile terminal, MT), or the like.

For example, the terminal device may be a handheld device, a vehicle-mounted device, or a road side unit that has a wireless connection function. Currently, for example, some examples of the terminal devices are: a mobile phone (mobile phone), a tablet computer, a notebook computer, a palmtop computer, a mobile internet device (mobile internet device, MID), an intelligent point of sale (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a smart meter (a smart water meter, a smart electrical meter, or a smart gas meter), eLTE-DSA UE, a device having an integrated access and backhaul (integrated access and backhaul, IAB) capability, a vehicle-mounted electronic control unit (electronic control unit, ECU), a vehicle-mounted computer, an in-vehicle cruise system, and a telematics box (telematics box, T-Box).

(3) Bandwidth part (bandwidth part, BWP): A bandwidth part is a segment of consecutive frequency domain resources in a carrier of a cell managed by the network device. For example, one BWP may include K consecutive subcarriers, or include M consecutive resource blocks (resource blocks, RBs), where both K and M are integers greater than 0.

The BWP may also be referred to as a bandwidth resource, a bandwidth area, a frequency domain resource part, or a part of a frequency domain resource, or may have another name. This is not limited in this application.

In this embodiment of this application, a cell (Cell) may also be referred to as a serving cell (serving Cell). One cell may have at least one uplink carrier and at least one downlink carrier, or only a downlink carrier, or only an uplink carrier. For example, a cell has one downlink carrier and two uplink carriers, and the two uplink carriers may respectively be a common carrier and a supplementary uplink carrier (supplementary uplink, SLTL) respectively. One or more downlink BWPs may be configured on one downlink carrier, or one or more uplink BWPs may be configured on one uplink carrier. At least one downlink BWP in downlink BWPs on a downlink active carrier is in an activate state, and at least one uplink BWP in uplink BWPs on an uplink active carrier is in the activate state.

Several states of the BWP are described below.

ABWP in an active state is referred to as an active BWP (active BWP). Communication transmission is performed between the terminal device and the network device by using frequency domain resources included in the active BWP. Optionally, one or more BWPs may be configured on one carrier, and numerologies (Numerologies) (which may include a subcarrier spacing (subcarrier spacing, SCS), a CP length, and the like) of different BWPs may be the same or different. When a plurality of BWPs are configured on one carrier, there may be one active BWP on the carrier at the same time, and the active BWP may be switched in a manner of radio resource control (radio resource control, RRC) signaling/downlink control information (downlink control information, DCI)/a timer (timer).

Dormant (dormant) BWP: The terminal device may perform channel state information (channel state information, CSI) measurement and automatic gain control (automatic gain control, AGC) on the dormant BWP, and may further perform beam management, but the terminal device does not perform PDCCH monitoring on the dormant BWP, or does not perform PDCCH monitoring for the dormant BWP. The terminal device either does not receive a DL-SCH (Downlink shared channel, downlink shared channel) on the dormant BWP, and does not report CSI; and the terminal device either does not report aperiodic CSI for the dormant BWP. The terminal device either does not need to send a sounding reference signal (sounding reference signal, SRS), an uplink shared channel (Uplink shared channel, UL-SCH), a random access channel (random access channel, RACH), and a physical uplink control channel (Physical uplink control channel, PUCCH) on a UL active BWP of a serving cell in which the dormant BWP is located. The dormant BWP is defined for a secondary cell (secondary cell, SCell). One dormant BWP or no dormant BWP may be configured for each SCell, and one of these BWPs can be configured as the dormant BWP only when the SCell is configured with at least one BWP for PDCCH monitoring. Optionally, the network device may configure the dormant BWP by using an RRC message, for example, configure the dormant BWP by sending an RRC message in which a PDCCH-config information element (PDCCH-config information element, PDCCH-config IE) is absent.

It should be noted that the dormant BWP and an opportunity for DRX (opportunity for DRX) in C-DRX belong to different concepts. It can be learned from the foregoing descriptions that the dormant BWP is a state of the BWP, and the terminal device does not perform PDCCH monitoring on the dormant BWP, but may perform CSI measurement, AGC, and the like. The opportunity for DRX in the C-DRX indicates a state of the terminal device in a period of time. The terminal device is in a sleep state (dormant state) in the opportunity for DRX, and does not perform PDCCH monitoring on all the BWPs.

(4) Search space set (search space set): A search space set is briefly referred to as an SS set subsequently, is configured by the network device, and the terminal device performs PDCCH monitoring based on the SS set on a downlink active BWP. Specifically, a PDCCH monitoring occasion (briefly referred to as a monitoring occasion subsequently) of the terminal device is determined by using the SS set. For one DL BWP, at least one SS set may be configured for the terminal device, and configuration information of each SS set includes at least one of the following configuration parameters.
a: an SS set index (index), used to identify the SS set.
b: an index of a control resource set (control resource set, CORESET) associated with the SS set.

The CORESET is a time-frequency resource set used to carry a PDCCH, and one CORESET includes several consecutive or non-consecutive RBs in frequency domain, and includes one to three consecutive symbols in time domain.

c: a PDCCH monitoring periodicity Ks and an offset Os. A value unit of Ks and Os may be a slot (slot).

d: a PDCCH monitoring pattern (pattern) within a slot, or also referred to as a PDCCH monitoring symbol within a slot, and indicating a start symbol of the CORESET within a slot. The CORESET may have a plurality of start symbols in one slot.

e: duration Ts, indicating a quantity of consecutive slots in the SS set, where Ts < Ks. A default value of Ts is one slot.

f: aggregation levels and a quantity of PDCCH candidates (PDCCH candidates) corresponding to the aggregation levels.

h: an SS set type indication, indicating whether the SS set is a common search space set (common search space set, CSS set) (CSS for short) or a user-specific search space set (UE-specific search space set, USS set) (USS for short).

If an SS set type is the CSS, the network device further indicates a DCI format (DCI format) such as a DCI format 0_0/DCI format 1_0, a DCI format 2_0, a DCI format 2_1, ..., or a DCI format 2_6 monitored at a location of a PDCCH candidate.

If an SS set type is the USS, the network device further configures a DCI format such as a DCI format 0_0/DCI format 1_0, a DCI format 0_1/DCI format 1_1, a DCI format 0_2/DCI format 1_2, or a DCI format 3_1/DCI format 3_1 monitored at a location of a PDCCH candidate.

g: a bitmap, indicating an index of one or more RB sets.

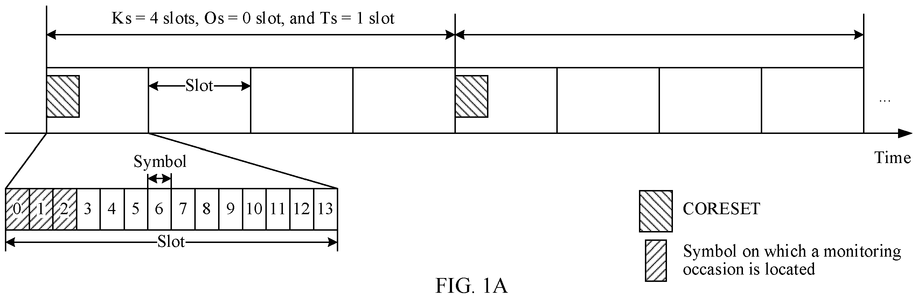

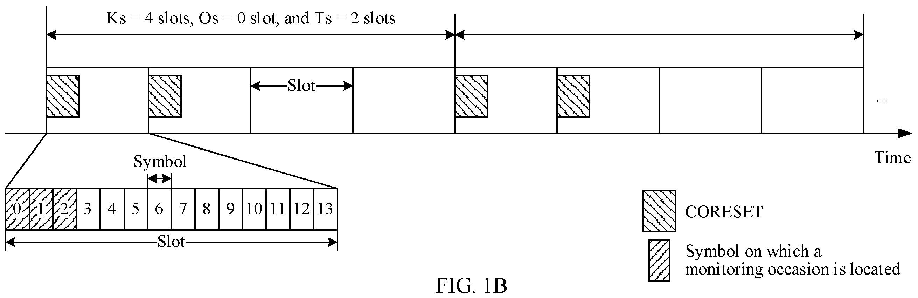

The terminal device may determine, based on a PDCCH monitoring periodicity, an offset, a PDCCH monitoring pattern within a slot, and duration that are of an SS set, a monitoring occasion corresponding to the SS set. For example, FIG. 1A and FIG. 1B each are a schematic diagram of monitoring occasions corresponding to two SS sets. In the foregoing two figures, the CORESET is first three symbols in one slot, duration of the SS set in FIG. 1A is one slot, and duration of the SS set in FIG. 1B is two slots.

It should be noted that, for example, a PDCCH monitoring occasion in FIG. 1A and FIG. 1B occupies first three symbols in the slot. However, in practice, a PDCCH monitoring pattern within a slot of the SS set is configured, so that the PDCCH monitoring occasion may be on any symbol in the slot, for example, a symbol in a middle of the slot or a symbol at an end of the slot.

It should be noted that, because the network device may configure a plurality of SS sets for one DL BWP, the terminal device may perform PDCCH monitoring on the DL BWP based on the plurality of SS sets; or may perform PDCCH monitoring based on some of the plurality of SS sets, and does not need to perform PDCCH monitoring based on the other some of the plurality of SS sets. For ease of description, in this application, the SS set used by the terminal device to perform PDCCH monitoring is described as an SS set in a monitoring state, and the SS set not used by the terminal device to perform PDCCH monitoring is described as an SS set in a non-monitoring state.

The monitoring state may also be referred to as an active state, an effective state, or the like. The non-monitoring state may also be referred to as a non-active state, a dormant state, an ineffective state, or the like. This is not limited in this application.

(5) Slot. A slot in this application is a concept of a slot in a 5G communication system, and a length value of absolute time of the slot is related to an SCS of a corresponding BWP. It can be learned from the foregoing explanations and descriptions of the BWP in (3) that a plurality of BWPs may be configured on one carrier, and when SCSs of different BWPs are different, lengths of slots on these BWPs are also different.

(6) The term "and/or" describes an association relationship between associated objects and indicates that three relationships may exist. For example, A and/or B may represent the following three cases: Only A exists, both A and B exist, and only B exists. The character "/" usually represents an "or" relationship between the associated objects.

It should be noted that "a plurality of" in this application means two or more. "At least one" means one or more.

In addition, it should be understood that in the descriptions of this application, terms such as "first" and "second" are merely used for distinguishing and description, but should not be understood as indicating or implying relative importance, or should not be understood as indicating or implying a sequence.

The following describes in detail embodiments of this application with reference to the accompanying drawings.

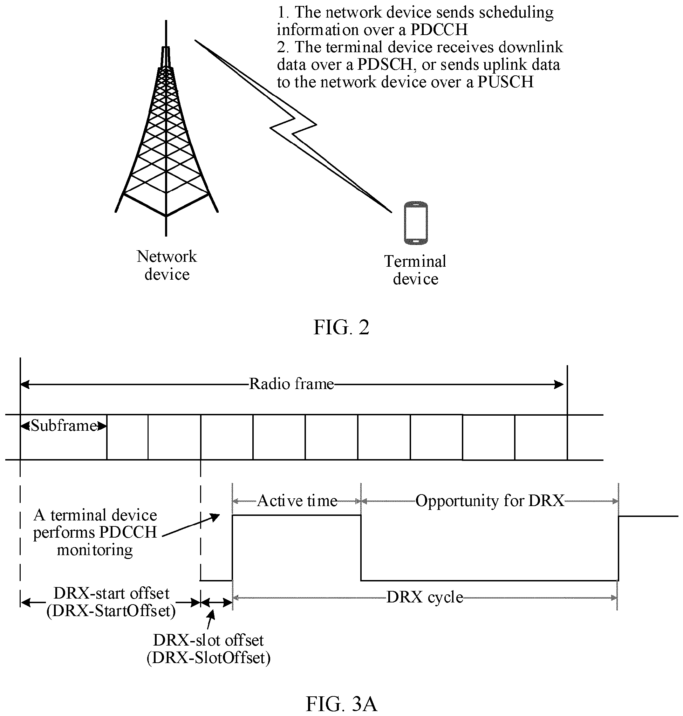

FIG. 2 shows a structure of a communication system to which a method according to an embodiment of this application is applicable. As shown in FIG. 2, the communication system includes: a network device and a terminal device.

The network device is an entity that can receive and transmit a wireless signal on a network side, and is responsible for providing a radio access-related service for the terminal device within coverage of the network device, and implementing a physical layer function, resource scheduling and radio resource management, quality of service (Quality of Service, QoS) management, radio access control, and a mobility management function.

The terminal device is an entity that can receive and transmit a wireless signal on a user side, and may access a network by accessing the network device. The terminal device may be any device that provides voice and/or data connectivity for a user, for example, an in-vehicle device or a smartphone. The terminal device and the network device are connected to each other through a Uu interface, to communicate with each other.

It should be noted that in a single-carrier scenario, the network device in FIG. 2 manages a cell, and the cell has a downlink carrier (namely, a DL carrier) in the communication system. In a multi-carrier scenario (a scenario in which the communication system supports a carrier aggregation (carrier aggregation, CA) technology), the network device in FIG. 2 may manage a plurality of cells, and each cell has one DL carrier. In the plurality of cells, a cell that works on a primary carrier (a primary frequency), establishes an RRC connection to the terminal device, and provides a secure input and higher layer signaling for the terminal device is referred to as a primary cell (Primary, PCell). A cell that works on a secondary carrier (a secondary frequency) and is used to increase additional radio resources is referred to as a secondary cell (SCell).

When the terminal device initially accesses the network device, the network device allocates one or more DL BWPs to the terminal device on a DL carrier based on a bandwidth capability of the terminal device and a bandwidth of the DL carrier. When the network device allocates a plurality of DL BWPs to the terminal device, the terminal device and the network device may perform downlink transmission (PDCCH transmission, PDSCH transmission, or the like) on a DL active BWP in the plurality of DL BWPs.

It should be noted that in the solutions provided in this application, unless otherwise specified, a carrier, a BWP, and an active BWP described in the following embodiments may respectively be the DL carrier, the DL BWP, and the DL active BWP. In addition, because the PDCCH is transmitted on the DL active BWP, the DL active BWP in the following may be briefly referred to as a BWP.

It should be noted that the communication system shown in FIG. 2 is used as an example, and constitutes no limitation on the communication system to which the method according to an embodiment of this application is applicable. In conclusion, embodiments of this application may be further applied to communication systems of various types and standards, for example, a 5th generation (5th Generation, 5G) communication system, a 6th generation (6th Generation, 6G) communication system, a future evolved communication system of another standard, vehicle to everything (vehicle to everything, V2X), vehicle to vehicle (vehicle to vehicle, V2V), Internet of Vehicles, machine type communication (Machine Type Communication, MTC), and Internet of Things (internet of things, IoT), and machine to machine (machine to machine, M2M). This is not limited in embodiments of this application.

In the communication system shown in FIG. 2, a resource used for data transmission between the network device and the terminal device is usually scheduled by the network device over the PDCCH. Control information transmitted over the PDCCH is referred to as DCI, and is mainly used to carry scheduling information of uplink/downlink data. Therefore, after accessing the network device, the terminal device may determine, by only continuously performing PDCCH monitoring, whether scheduling occurs. If detecting the scheduling information on the PDCCH, the terminal device may receive, based on the scheduling information over the PDSCH, the downlink data sent by the network device; or send the uplink data to the network device over a PUSCH.

However, in many cases, the network device does not always send the scheduling information to the terminal device, but the terminal device may determine, by only periodically performing PDCCH monitoring, whether the scheduling occurs. When there is no service transmission between the network device and the terminal device, the network device does not send the scheduling information, but if the terminal device performs unnecessary PDCCH monitoring in this period, this leads to an unnecessary power consumption waste. Therefore, one manner is to reduce unnecessary PDCCH monitoring of the terminal device as much as possible, to reduce power consumption of the terminal device.

The following separately describes several solutions for adjusting a PDCCH monitoring occasion provided in this application.

Solution 1: connected mode-discontinuous reception (connected mode-discontinuous reception, C-DRX) mechanism

In the C-DRX mechanism, as shown in FIG. 3A, the terminal device may periodically turn on a receiver to perform PDCCH monitoring based on a DRX cycle (DRX cycle) configured by the network device. As shown in FIG. 3A, the DRX cycle includes two time periods: active time (active time) and an opportunity for DRX (opportunity for DRX, or referred to as dormant time or non-active time (non-active time)). The terminal device performs PDCCH monitoring in the active time; and may be in a dormant state in the opportunity for DRX, and does not perform PDCCH monitoring.

It should be noted that the C-DRX mechanism is mainly used to control monitoring of a PDCCH scrambled by using a C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, and an AI-RNTI. A PDCCH scrambled by using other RNTIs (for example, an SI-RNTI, a RA-RNTI, a MsgB-RNTI, a TC-RNTI, and a P-RNTI) is not constrained in the C-DRX mechanism. That is, in the non-active time, a non-monitored PDCCH is the PDCCH scrambled by using the C-RNTI, the CI-RNTI, the CS-RNTI, the INT-RNTI, the SFI-RNTI, the SP-CSI-RNTI, the TPC-PUCCH-RNTI, the TPC-PUSCH-RNTI, the TPC-SRS-RNTI, and the AI-RNTI.

When the C-DRX mechanism is introduced to the communication system, the network device configures, for the terminal device UE by using RRC signaling, parameters such as a DRX cycle, duration of an on duration timer (on Duration Timer), duration of an inactivity timer (Inactivity timer), duration of a hybrid automatic repeat request (hybrid automatic repeat request, HARQ) round trip time (round trip time, RTT) timer (HARQ-RTT-Timer), and duration of a retransmission timer (Retransmission Timer). Details may be shown in Table 1. The terminal device may perform PDCCH monitoring in running time of drx-onDurationTimer, drx-InactivityTimer, drx-RetransmissionTimerDL, and drx-RetransmissionTimerUL, and these time is collectively referred to as active time.

The active time further includes: a running period of ra-ContentionResolutionTimer (used for contention resolution in a random access process) or msgB-ResponseWindow (used for 2-step random access contention resolution); a pending period after the UE sends a scheduling request (SR, scheduling request) on a PUCCH; and a period in which the UE successfully receives a random access response (RAR, random access response) for non-contention-based (non-contention-based) random access, but does not receive a PDCCH indicating new transmission. The terminal device performs PDCCH monitoring in the active time.

**Table 1 C-DRX configuration parameter**

| DRX configuration parameter (DRX parameter) | Description (Description) |
|---|---|
| Slot offset (drx-SlotOffset) | Delay time before drx-onDurationTimer is started when a DRX cycle starts |
| Long cycle and start offset (drx-LongCycleStartOffset) | Duration of a long DRX (long DRX) cycle and time at which the DRX cycle starts |
| Short cycle (drx-ShortCycle) (optional) | Duration of a short DRX (short DRX) cycle |
| Duration of the short cycle (drx-ShortCycleTimer) (optional) | Time at which the terminal device continuously uses drx-ShortCycle |
| On duration timer duration (drx-onDurationTimer) | Duration during which PDCCH monitoring starts to be continuously performed in each DRX cycle |
| Inactivity timer duration (drx-Inactivity Timer) | When it is detected that a PDCCH indicates initial transmission of a UL or a DL, time at which the timer is started (or restarted) and PDCCH monitoring is continuously performed |
| Downlink HARQ-RTT timer duration (drx-HARQ-RTT-TimerDL) | Minimum duration during which the terminal device needs to wait before an arrangement of DL retransmission may be received |
| Uplink HARQ-RTT timer duration (drx-HARQ-RTT-TimerUL) | Minimum duration during which the terminal device needs to wait before a LTL grant for HARQ retransmission may be received |
| Downlink retransmission timer duration (drx-RetransmissionTimerDL) (for per downlink HARQ process) (per DL HARQ process) | Maximum duration from time at which the terminal device expects to receive the DL retransmission to time at which the terminal device receives the downlink retransmission |
| Uplink retransmission timer duration (drx-RetransmissionTimerUL) (for per uplink HARQ process) (per UL HARQ process) | Maximum duration from time at which the terminal device expects to receive UL grant retransmission (UL grant retransmission) to time at which the terminal device receives this information |

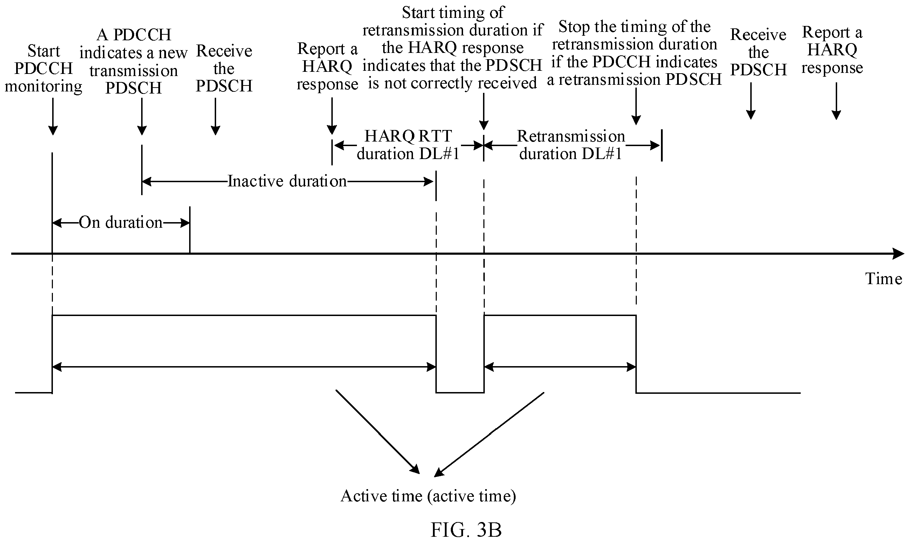

ADL is used as an example. For behavior of the terminal device in a C-DRX process, refer to FIG. 3B.

The terminal device performs PDCCH monitoring in a running period of an on duration timer (on Duration timer) in a DRX cycle. If detecting no PDCCH in the running period of the on duration timer, the terminal device enters an opportunity for DRX after the on duration timer ends. In this case, the terminal device enters a sleep state, and does not perform PDCCH monitoring. If detecting that the PDCCH schedules a new transmission PDSCH, the terminal device starts or restarts an inactivity timer (Inactivity timer). In other words, each time initial transmission data of UE is scheduled, the inactivity timer is started (or restarted) once. In a running process of the inactivity timer, the terminal device is always in an active state until the timer expires, and performs PDCCH monitoring in a running period of the inactivity timer. The terminal device receives the PDSCH based on received scheduling information of the PDCCH, and feeds back a HARQ response (for example, an ACK/NACK) based on a result of receiving the PDSCH. If the terminal device does not correctly receive a PDSCH (where, to be specific, the HARQ response is a NACK), the terminal device starts a HARQ RTT timer (HARQ-RTT-timer) of the HARQ process, and starts a retransmission timer (Retransmission timer) of the HARQ process after running of the HARQ RTT timer ends. The terminal device performs PDCCH monitoring in a running period of the retransmission timer. If the UE detects a PDCCH indicating PDSCH retransmission, the terminal device stops the retransmission timer even if the retransmission timer does not expire. The retransmission timer indicates maximum time at which the terminal device expects to receive the PDCCH for scheduling the downlink retransmission.

In the C-DRX mechanism, the network device may further send media access control (medium access control, MAC) control element (control element, CE) signaling to the terminal device in the running period of the inactivity timer (Inactivity Timer), to terminate remaining timing of the inactivity timer in advance. After receiving the MAC CE signaling, the terminal device ends the remaining timing of the inactivity timer, to reduce power consumption. A manner of terminating the inactivity timer by using the MAC CE signaling may be considered as enabling the terminal device to sleep for a long time. Therefore, this manner increases a scheduling delay.

Solution 2: PDCCH-based wake up signal (PDCCH-based wake up signal) mechanism

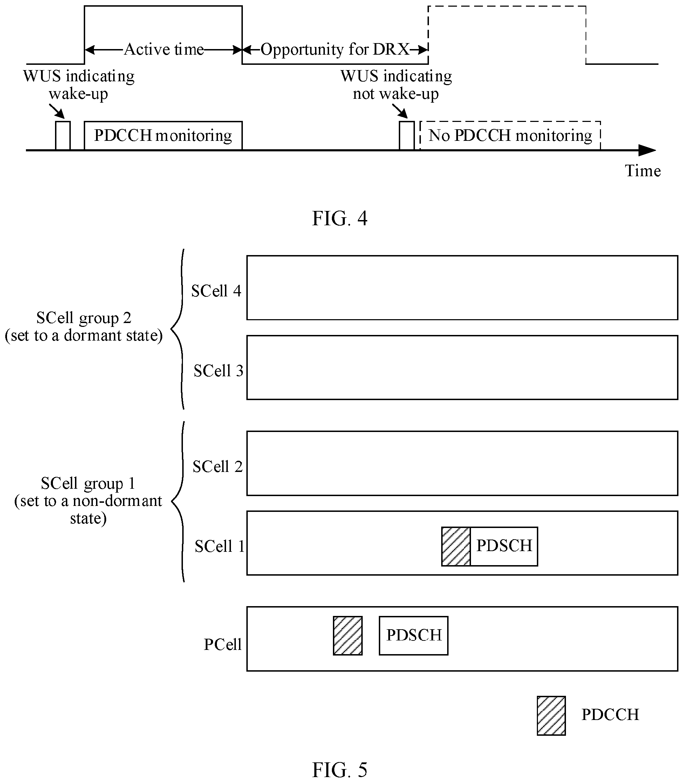

To further reduce power consumption of the UE, on the basis of the C-DRX mechanism, a wake-up signal (wake-up signal, WUS) is introduced. To be specific, before a DRX-on duration timer (on duration timer) starts, the network device sends the WUS to the terminal device, to notify the terminal device whether to start the on duration timer, as shown in FIG. 4.

The terminal device monitors a PDCCH-based WUS before the on duration timer (on duration timer) is started. When detecting a WUS indicating wake-up, the terminal device starts the on duration timer, and performs a normal operation within the on duration timer, including performing PDCCH monitoring. When detecting a WUS indicating not wake-up, the terminal device does not start the on duration timer, and it means that the terminal device does not perform PDCCH monitoring in a next period of time, so that power consumption is reduced.

For example, the PDCCH-based WUS may be carried in DCI in a DCI format (format) 2_6, and the DCI may be scrambled by using a power saving-radio network temporary identifier (power saving-radio network temporary identifier, PS-RNTI) of the terminal device. The DCI in the DCI format 2_6 may carry a plurality of WUSs, and each WUS may occupy one field (where the field occupies at least one bit). One WUS may indicate whether one or more terminal devices are woken up. In other words, a plurality of terminal devices may reuse a same WUS.

Solution 3: secondary cell dormancy (SCell dormancy) mechanism

The dormancy mechanism is applicable only to an SCell. For a PCell, the terminal device still needs to perform PDCCH monitoring on a PDCCH monitoring occasion.

Switching between dormancy (dormancy) behavior and non-dormancy (non-dormancy) behavior of the SCell is implemented through BWP switching. When an SCell is indicated as dormancy, a downlink active BWP on the SCell is switched to a dormant BWP (dormant BWP). It can be learned from the foregoing explanations and descriptions of the BWP that the terminal device does not need to monitor a PDCCH on the dormant BWP, and during cross-carrier scheduling, does not need to monitor a PDCCH used to schedule a PDSCH on the dormant BWP.

Switching between a dormant state and a non-dormant state of the SCell may be indicated by using DCI, and there are three indication manners.

Manner 1: Whether the SCell is in the dormant state or the non-dormant state is indicated by using a secondary cell dormancy indication (SCell dormancy indication) field in DCI in a DCI format 0_1 or a DCI format 1_1. The DCI can be further used to schedule data simultaneously.

Optionally, the secondary cell dormancy indication field may include a plurality of fields, each field corresponds to one SCell or one SCell group (SCell group), and each field may occupy one bit. Different values of each field represent different states of the SCell or the SCell group corresponding to the field.

For example, the network device may configure a maximum of five SCell groups by using a parameter SCell-groups-for -dormancy-within-active-time. Correspondingly, a secondary cell dormancy indication field in DCI may occupy a maximum of five bits, and each bit corresponds to one SCell group. When a value of a bit in the secondary cell dormancy indication field is "0", each active BWP of each active SCell in the SCell group corresponding to the bit is switched to a dormant BWP. When a value of the bit is "1", if the terminal device works on a non-dormant BWP (non-dormant BWP) of an active SCell in the SCell group corresponding to the bit, the UE continues to work on the non-dormant BWP. If the UE is on the dormant BWP, the UE switches to a first non-dormant BWP (first non-dormant BWP).

Refer to FIG. 5. In a scenario in which the network device configures one PCell and four SCells, the network device may group the four SCells into two SCell groups: an SCell group 1 and an SCell group 2, and may send, to the terminal device by using the PCell, DCI carrying a secondary cell dormancy indication field. The secondary cell dormancy indication field in the DCI occupies two bits respectively corresponding to one SCell group. When a value of the two bits in the dormancy indication field is "10", the SCells in the SCell group 1 are in a non-dormant state, but for an active SCell in the SCell group 1, the terminal device normally performs PDCCH monitoring and data transmission. The SCells in the SCell group 2 are in a dormant state, but for an active SCell in the SCell group 2, the terminal device works on a dormant BWP, and does not need to perform PDCCH monitoring.

Manner 2: Whether the SCell is in the dormant state or the non-dormant state is indicated by using a specific field in DCI in a DCI format 1_1. In this case, the DCI cannot be used to schedule data simultaneously.

For example, when all bits in a frequency domain resource assignment (frequency domain resource assignment) field in the DCI in the DCI format 1_1 are set to 0 (when a resource allocation manner resourceAllocation is type 0) or 1 (when a resource allocation manner resourceAllocation is type 1) or 0 or 1 (when a resource allocation manner is dynamically switched), the state of the SCell is indicated by using the following field in the DCI:
a modulation and coding scheme (Modulation and coding scheme of transport block 1) of transport block 1 field;
a new data indicator of transport block 1 (New data indicator of transport block 1) field;
a redundancy version of transport block 1 (Redundancy version of transport block 1) field;
a HARQ process number (HARQ process number) field;
an antenna port (Antenna port(s)) field; or
a DMRS sequence initialization (DMRS sequence initialization) field.

Each bit in the foregoing field may correspond to one SCell, and indicates whether the corresponding SCell is in the dormant state or the non-dormant state.

Manner 3: Whether the SCell is in the dormant state or the non-dormant state is indicated by using a secondary cell dormancy indication (SCell dormancy indication) field in DCI in a DCI format 2_6. This indication manner is basically similar to the foregoing Manner 1, and a difference lies in that the DCI in the DCI format 2_6 is group common DCI, the network device may send the DCI to a plurality of terminal devices, and the DCI does not carry data scheduling information.

Solution 4: PDCCH-based PDCCH skipping (PDCCH-based PDCCH skipping) monitoring mechanism

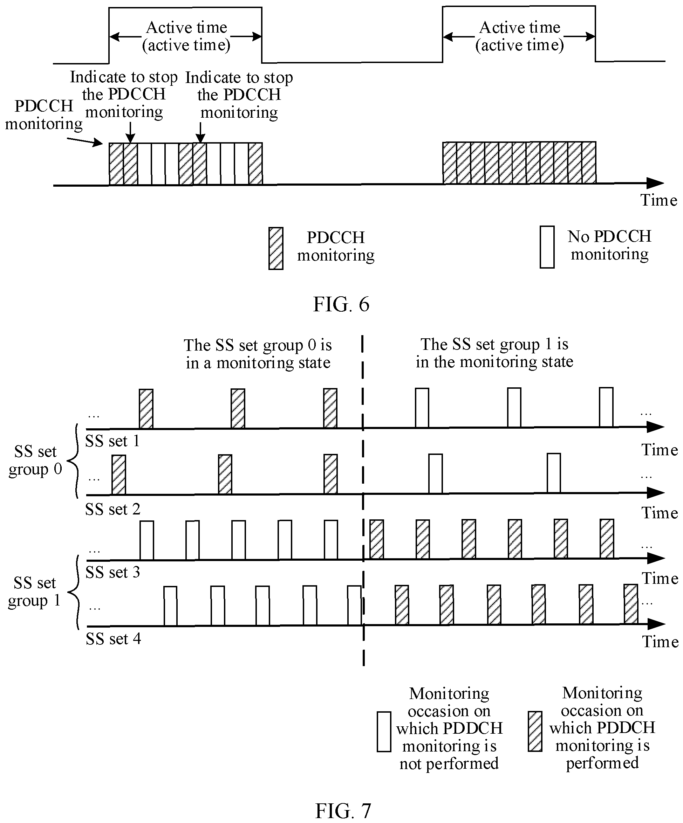

A core method of the mechanism is that the network device sends skip PDCCH monitoring (skip PDCCH monitoring) signaling to the terminal device over a PDCCH, and the skip PDCCH monitoring signaling indicates the terminal device to stop PDCCH monitoring in a next specified time window, to reduce power consumption, as shown in FIG. 6. The time window in which PDCCH monitoring is not performed may be several slots, several milliseconds, or remaining duration of an inactivity timer (inactivity timer). The mechanism can enable that the terminal device sleeps in relatively short time subsequently, so that power consumption is reduced, and impact on a scheduling delay is also reduced as much as possible.

Optionally, in the mechanism, the network device may configure, for the terminal device by using RRC signaling, a plurality of values of the time window in which PDCCH monitoring is not performed, and then indicate, by using the foregoing skip PDCCH monitoring signaling, one of the values of the time window in which PDCCH monitoring is not performed.

Solution 5: dynamic search space set group switching (dynamic search space set group switching) mechanism

As described above, the network device may configure a plurality of SS sets for one BWP. In the mechanism, the network device may group these SS sets to form a plurality of SS set groups (SS set groups). A same SS set may be grouped into different SS set groups. The terminal device may perform PDCCH monitoring based on SS sets in some SS set groups. For ease of description, some SS set groups are described as SS set groups in a monitoring state. The terminal device may perform SS set group switching based on indication information sent by the network device or according to a predefined rule. For example, the terminal device currently performs PDCCH monitoring based on SS sets in an SS set group 0. When receiving the indication information sent by the network device, the terminal device stops performing PDCCH monitoring based on the SS sets in the SS set group 0, and performs PDCCH monitoring based on SS sets in an SS set group 1.

It should be further noted that a Type3-PDCCH CSS and a USS support dynamic SS set group switching.

The network device may send SS set group information to the terminal device. For example, a parameter is introduced into a configuration parameter of an SS set to identify an SS set group or SS set groups to which the SS set belongs. As shown in FIG. 7, the terminal device may group an SS set 1 to an SS set 4 into two SS set groups based on the SS set group information. As shown in FIG. 7, the terminal device may first perform PDCCH monitoring based on the SS sets in the SS set group 0; and then perform PDCCH monitoring in a next time period based on the SS sets in the SS set group 1.

In this way, the network device may group the SS set groups based on sparse degrees of monitoring occasions corresponding to the SS sets. When performing PDCCH monitoring based on the SS set group with sparse monitoring occasions, the terminal device can reduce a quantity of times of turning on a receiver to perform PDCCH monitoring, to increase a dormant opportunity, so that power consumption of the terminal device is reduced. However, when being in a service transmission process, the terminal device performs PDCCH monitoring based on the SS set group with relatively dense monitoring occasions. In this way, the terminal device may frequently perform PDCCH monitoring, and the network device has more scheduling opportunities, so that a service scheduling delay is reduced. For example, in FIG. 7, the SS set 1 and the SS set 2 that have relatively sparse monitoring occasions are grouped into the SS set group 0, and the SS set 3 and the SS set 4 that have relatively dense monitoring occasions are grouped into the SS set group 1.

In a current technology, this mechanism is used for an unlicensed spectrum. In this mechanism, a manner of dynamically switching a search space set may be but is not limited to the following several manners:

Manner 1: An SS set group switching flag (search space set group switching flag) field in DCI in a DCI format 2_0 is used for indication, in other words, an SS set group switching condition is that an indication indicating SS set group switching is received. Optionally, the SS set group switching flag field may include at least one field, and each field corresponds to at least one terminal device. A value of each field indicates whether a terminal device corresponding to the field performs SS set group switching, or a value of each field indicates an SS set group (an SS set group in a monitoring state) used by a terminal device corresponding to the field to perform PDCCH monitoring (for example, a value of each field indicates an identifier of an SS set group in a monitoring state).

For example, the SS set group switching flag field occupies at least one bit, and each bit indicates the at least one terminal device to perform SS set group switching. In other words, a plurality of terminal devices may reuse a same bit. When a value of the bit is 0, the terminal device corresponding to the bit performs PDCCH monitoring based on the SS sets in the SS set group 0, and stops performing PDCCH monitoring based on the SS sets in the SS set group 1. Therefore, the SS sets in the SS set group 0 may be described as SS sets in a monitoring state. When a value of the bit is 1, the terminal device performs PDCCH monitoring based on the SS sets in the SS set group 1, and stops performing PDCCH monitoring based on the SS sets in the SS set group 0. Therefore, the SS sets in the SS set group 1 may be described as SS sets in a monitoring state.

Manner 2: Switching is performed by using a timer. To be specific, an SS set group switching condition is that the timer set for an SS set group expires. When starting to perform PDCCH monitoring based on the SS sets in the SS set group 1, the terminal device simultaneously starts the timer, where duration of the timer may be configured by the network device by using RRC signaling. The timer performs timing once (for example, duration of the timer is decreased by 1) each time a slot is passed. When the timer expires, the terminal device switches to the SS set group 0. To be specific, the terminal device starts to perform PDCCH monitoring based on the SS sets in the SS set group 0, and stops performing PDCCH monitoring based on the SS sets in the SS set group 1.

Manner 3: When the SS sets in the SS set group 1 are in a monitoring state, in other words, the terminal device performs PDCCH monitoring based on the SS sets in the SS set group 1, if channel occupancy time (channel occupancy duration, COD) ends, the terminal device switches to the SS set group 0 (to be specific, the terminal device starts to perform PDCCH monitoring based on the SS sets in the SS set group 0, and stops performing PDCCH monitoring based on the SS sets in the SS set group 1). That is, an SS set group switching condition is that the channel occupancy time ends.

Manner 4: The terminal device performs PDCCH monitoring based on the SS sets in the SS set group 0, and when detecting DCI in any DCI format, the terminal device switches an SS set group in a monitoring state from the SS set group 0 to the SS set group 1. To be specific, the terminal device starts to perform PDCCH monitoring based on the SS sets in the SS set group 1, and stops performing PDCCH monitoring based on the SS sets in the SS set group 0. That is, an SS set group switching condition is that PDCCH monitoring is performed based on SS sets in an SS set group.

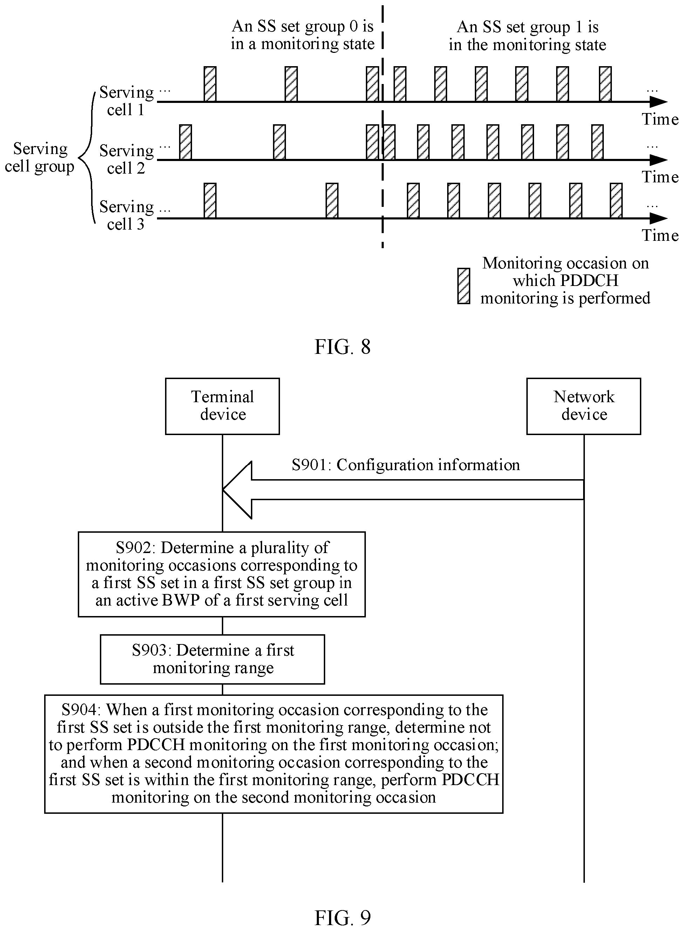

It should be noted that, in a multi-carrier scenario, the network device may group a plurality of serving cells (serving Cells). To be specific, the network device may group the plurality of serving cells into a plurality of serving cell groups (serving Cell groups), and one serving cell group may include one or more serving cells. All SS sets in each BWP of each serving cell may be grouped into a plurality of SS set groups in the foregoing manner. When performing SS set group switching, the terminal device may perform SS set group switching on active BWPs of serving cells in a same serving cell group. Refer to FIG. 8. A serving cell 1 to a serving cell 3 belong to a same serving cell group. When performing SS set group switching, the terminal device may simultaneously perform SS set group switching on active BWPs of the serving cell 1 to the serving cell 3.

It can be learned from the foregoing descriptions of the BWP, the SS set, and the dynamic SS set group switching mechanism, and FIG. 7 that parameters (for example, a PDCCH monitoring periodicity Ks, an offset Os, a PDCCH monitoring pattern within a slot, and duration Ts that are used to determine a monitoring occasion) of different SS sets included in a same SS set group in a BWP may be different or even completely different. Consequently, monitoring occasions corresponding to different SS sets in the same SS set group are different, and are staggered in time. Therefore, even if monitoring occasions corresponding to a single SS set (for example, the SS set group 0 in FIG. 7) are relatively sparse, the terminal device still needs to frequently turn on a radio frequency device such as the receiver based on monitoring occasions corresponding to each SS set to perform PDCCH monitoring. As a result, a power consumption reduction gain is reduced.

In addition, in the multi-carrier scenario, the terminal device may simultaneously perform PDCCH monitoring based on SS set groups that are in a monitoring state in active BWPs of a plurality of serving cells. In addition to non-aligned monitoring occasions caused by different parameters of the SS sets, SCSs of BWPs on different carriers are also different (which causes different slots corresponding to the BWPs on different carriers). This further causes non-aligned monitoring occasions on the carriers. Especially, in an intra-band carrier aggregation (intra-CA) scenario, for different carriers, the terminal device may share a same radio frequency device, and may frequently turn on the radio frequency device such as the receiver to perform PDCCH monitoring in different serving cells. As a result, a power consumption reduction gain is reduced.

An embodiment of this application provides a communication method, to resolve the foregoing problem, improve flexibility of performing PDCCH monitoring by a terminal device, reduce unnecessary PDCCH monitoring, and reduce power consumption of the terminal device. It should be noted that the method is implemented based on the foregoing dynamic SS set group switching mechanism. The method may be applied to the communication system shown in FIG. 2. The following describes, with reference to a flowchart shown in FIG. 9, the method provided in this embodiment of this application.

The following first describes a procedure of the communication method in a single-carrier scenario. In the following embodiment, an example in which a serving cell of the terminal device is a first serving cell is used for description. A network device may configure a plurality of BWPs on a carrier (briefly referred to as a first carrier) corresponding to the first serving cell. In the following descriptions, the BWPs configured on the first carrier are briefly referred to as first BWPs.

S901: The network device sends configuration information to the terminal device. The configuration information may include but is not limited to the following information: SS set configuration information and SS set group information.

Optionally, the configuration information may be carried in one or more pieces of RRC signaling.

The SS set configuration information includes configuration parameters of a plurality of SS sets configured for each first BWP. The configuration parameter of the SS set includes configuration parameters such as an SS set index, a PDCCH monitoring periodicity, and duration. For the parameters corresponding to the SS sets, refer to the foregoing descriptions. Details are not described herein again.

For each first BWP, the SS set group information is used to group the plurality of SS sets in the first BWP. It should be noted that a type-3-PDCCH CSS and/or a USS may participate in grouping.

In an example, a new parameter is introduced for an SS set, and may be subsequently referred to as a group parameter. A group parameter of any SS set is used to identify an SS set group or SS set groups to which the SS set belongs. Therefore, for a first BWP, the SS set group information is group parameters of a plurality of SS sets in the first BWP.

In another example, the SS set group information for the first BWP may include an SS set group member list in the first BWP. Each SS set group member list includes an SS set index belonging to the SS set group.

In an implementation, the configuration information may further include effective time P. The effective time P indicates that after an SS set group switching condition is met and the effective time expires, another SS set group is switched to. A counting unit of the effective time P may be a millisecond, a second, a frame, a subframe, a slot, a symbol, or the like. Optionally, the network device may configure corresponding effective time P for one first BWP, or configure effective time P for one serving cell.

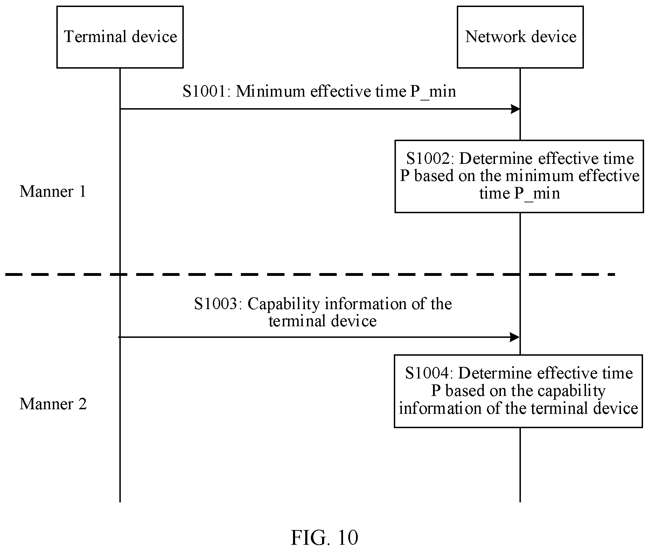

Optionally, as shown in FIG. 10, the network device may determine the effective time P in, but not limited to, the following two manners.

### Manner 1

S1001: Before S901 is performed, the terminal device sends minimum effective time P_min to the network device.

S1002: The network device determines the effective time P based on the received minimum effective time P_min, where the effective time P is greater than or equal to the minimum effective time P_min.

### Manner 2

S1003: Before S901 is performed, the terminal device sends capability information of the terminal device to the network device. Different capability information corresponds to different minimum effective time, as shown in Table 2. It should be noted that Table 2 is merely an example, and does not limit a value of the minimum effective time.

**Table 2 Minimum effective time corresponding to different capability information**

| µ | Minimum effective time corresponding to capability information 1 | Minimum effective time corresponding to capability information 2 |
|---|---|---|
| 0 | 25 | 10 |
| 1 | 25 | 12 |
| 2 | 25 | 22 |
| 3 | 28 | 25 |

In Table 2, a unit of each minimum effective time is a symbol, and a subcarrier spacing represented by µ is Δ*f* = 2*^{µ}* . 15 [kHz] .

S 1004: The network device may determine the effective time P based on the received capability information of the terminal device. Specifically, the network device first determines minimum effective time P_min based on the capability information of the terminal device, and then determines the effective time based on the minimum effective time P_min, where the effective time P is greater than or equal to the minimum effective time P_min.

In another implementation, the configuration information may further include a timer used for SS set group switching. A counting unit of the timer may be a slot, a second, a millisecond, or the like. For example, when the counting unit of the timer is the slot, the terminal device may perform counting (in ascending or descending order) based on a slot corresponding to a reference BWP, or perform counting based on a slot corresponding to a current active BWP. The reference BWP may be a BWP with a smallest SCS in the plurality of BWPs of the first serving cell. Optionally, the network device may respectively configure a corresponding timer for each first BWP, or configure a timer for a serving cell.

In still another implementation, the configuration information may further include a first indication. The first indication indicates the terminal device to skip PDCCH monitoring, in other words, indicates the terminal device not to perform PDCCH monitoring on some monitoring occasions (or not to perform PDCCH monitoring on monitoring occasions outside a first monitoring range), to reduce power consumption. In an embodiment, the first indication may indicate 0 or 1. For example, "0" indicates that PDCCH monitoring is not performed on some monitoring occasions (or PDCCH monitoring is not performed on the monitoring occasions outside the first monitoring range), and "1" indicates that PDCCH monitoring is performed based on monitoring occasions corresponding to an SS set in an SS set group and by using a current technology. In another embodiment, when the first indication exists, it indicates that PDCCH monitoring is not performed on some monitoring occasions (or PDCCH monitoring is not performed on the monitoring occasions outside the first monitoring range). When the first indication does not exist, it indicates that PDCCH monitoring is performed based on monitoring occasions corresponding to an SS set in an SS set group and by using a current technology. The reverse is also true.

It should be noted that the configuration information in S901 may be configured in a same information element (information element, IE), or may be configured in a plurality of IEs. This is not limited in this application.

S902: The terminal device determines a plurality of monitoring occasions corresponding to a first SS set in a first SS set group in an active BWP of a first serving cell. The active BWP is included in a plurality of first BWPs configured for the first serving cell.

Optionally, the terminal device may determine, by using a configuration parameter of the first SS set in the configuration information received in S901, the plurality of monitoring occasions corresponding to the first SS set, as shown in FIG. 1A or FIG. 1B. The configuration parameter includes at least one of the following: a monitoring periodicity Ks, an offset Os, a PDCCH monitoring pattern within a slot, and duration Ts.

S903: The terminal device determines a first monitoring range.

It should be noted that an execution sequence of S902 and S903 is not limited in this application. The terminal device may first perform S902 and then perform S903, or first perform S903 and then perform S902, or execution time of the two steps overlaps.

Optionally, the terminal device may determine the first monitoring range in but not limited to the following manners.

Manner 1: The terminal device determines the first monitoring range based on a monitoring occasion corresponding to a reference SS set.

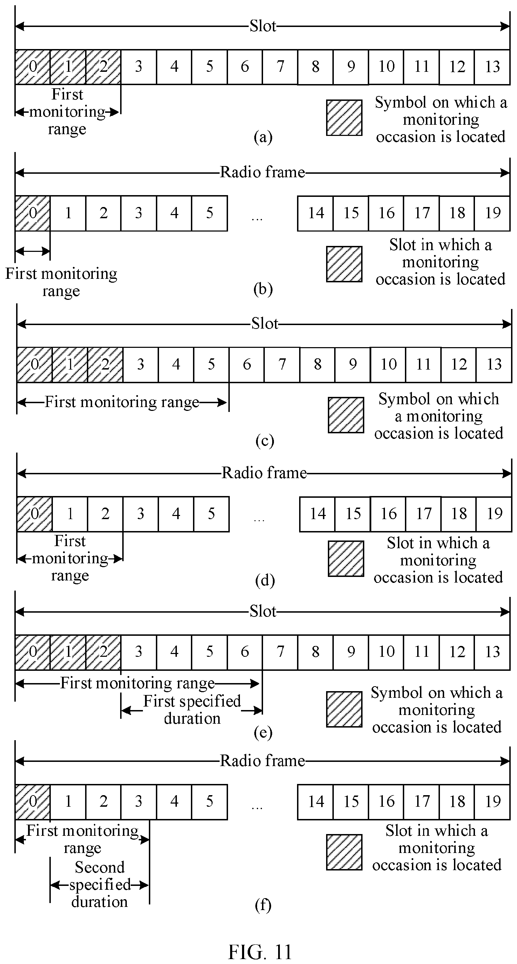

The first monitoring range may be determined in but is not limited to any one of the following determining manners:
determining manner 1: a symbol on which the monitoring occasion corresponding to the reference SS set is located, referring to (a) in FIG. 11;
determining manner 2: a slot in which the monitoring occasion corresponding to the reference SS set is located, referring to (b) in FIG. 11;
determining manner 3: a symbol on which the monitoring occasion corresponding to the reference SS set is located and a first specified quantity of adjacent symbols, referring to (c) in FIG. 11;
determining manner 4: a slot in which the monitoring occasion corresponding to the reference SS set is located and a second specified quantity of adjacent slots, referring to (d) in FIG. 11;
determining manner 5: a symbol on which the monitoring occasion corresponding to the reference SS set is located and adjacent first specified duration, referring to (e) in FIG. 11; and
determining manner 6: a slot in which the monitoring occasion corresponding to the reference SS set is located and adjacent second specified duration, referring to (f) in FIG. 11.

The first specified quantity, the second specified quantity, the first specified duration, or the second specified duration may be predefined, or may be configured by the network device. This is not limited in this application. In addition, adj acent to a symbol or a slot may be left adjacent or right adjacent. This is not limited in this application either. In addition, in the foregoing determining manners, the symbol or the slot on/in which the monitoring occasion corresponding to the reference SS set is located is used as a reference. However, the solution provided in this application is also applicable to determining the first monitoring range by using a subframe and a radio frame in which the monitoring occasion corresponding to the reference SS set is located as a reference. For the foregoing different determining manners, power consumption reduction effects and implementation flexibility are different. For example, the power consumption reduction effect of the determining manner 1 is the best, but the implementation complexity for the terminal device is also relatively high. The power consumption reduction effects of the determining manner 3 to the determining manner 6 are slightly poorer than that of the determining manner 1, but implementation complexity for the terminal device is reduced.

In Manner 1, the reference SS set may be determined by the network device and configured for the terminal device; or is determined by the terminal device according to a rule specified in a protocol or a standard, or a rule agreed on with the network device. This is not limited in this application.

Optionally, when configuring the reference SS set for the terminal device, the network device may implement the configuration in the following two manners. Manner 1: A new parameter (which may be referred to as a reference SS set flag parameter) is introduced for an SS set to indicate whether the SS set is the reference SS set. Manner 2: The network device sends first information to the terminal device. The first information indicates the reference SS set. For example, the first information includes an SS set index used for the reference SS set or a configuration parameter of the reference SS set.

Optionally, the terminal device or the network device may determine the reference SS set in the following manner.

When the first SS set group includes a plurality of SS sets, the plurality of SS sets include the first SS set; and the terminal device or the network device determines the reference SS set based on configuration parameters corresponding to the plurality of SS sets. The configuration parameter includes at least one of the following: a PDCCH monitoring periodicity, a PDCCH monitoring pattern within a slot, duration, and an SS set index.

In this embodiment of this application, the terminal device or the network device may determine a virtual SS set as the reference SS set based on the configuration parameters corresponding to the plurality of SS sets; or select one from the plurality of SS sets as the reference SS set.

Because the first monitoring range is determined based on the monitoring occasion corresponding to the reference SS set, in consideration of reducing power consumption of the terminal device, the monitoring occasions corresponding to the reference SS set may be more sparse than monitoring occasions corresponding to some or all SS sets in the first SS set group.

Therefore, to reduce the power consumption of the terminal device, when the reference SS set is the virtual SS set, the parameter of the reference SS set may meet at least one of the following conditions:
a PDCCH monitoring periodicity of the reference SS set is greater than or equal to a maximum value of PDCCH monitoring periodicities of the plurality of SS sets in the first SS set group;
a quantity of start symbols in a CORESET in the PDCCH monitoring pattern within the slot of the reference SS set is less than or equal to a minimum value of a quantity of start symbols in a CORESET in the PDCCH monitoring pattern within the slot of the plurality of SS sets in the first SS set group; and
duration of the reference SS set is less than or equal to a minimum value of duration of the plurality of SS sets in the first SS set group.

Similarly, to reduce the power consumption of the terminal device, when the reference SS set is one selected from the first SS set group, the reference SS set may meet at least one of the following conditions:
a largest PDCCH monitoring periodicity in the first SS set group;
a minimum quantity of start symbols in the CORESET in the PDCCH monitoring pattern within the slot in the first SS set group; and
minimum duration in the first SS set group.

Certainly, the terminal device or the network device may further select the reference SS set from the first SS set group by using another parameter. For example, an SS set with a smallest or largest SS set index in the first SS set group is selected as the reference SS set.

Manner 2: The first monitoring range is determined by the network device and configured for the terminal device by using RRC signaling. Optionally, the network device may determine the first monitoring range by using the method for determining the first monitoring range by the terminal device recorded in Manner 1. Therefore, for same parts, refer to each other. Details are not described herein again.

Manner 3: The first monitoring range is specified in a protocol or a standard.

S904: The terminal device performs PDCCH monitoring based on the SS set in the first SS set group and the first monitoring range. The first SS set is still used as an example for description. This step specifically includes: When a first monitoring occasion corresponding to the first SS set is outside the first monitoring range, the terminal device determines not to perform PDCCH monitoring on the first monitoring occasion. When a second monitoring occasion corresponding to the first SS set is within the first monitoring range, the terminal device performs PDCCH monitoring on the second monitoring occasion, where the first monitoring occasion is included in the plurality of monitoring occasions corresponding to the first SS set, and the second monitoring occasion is included in the plurality of monitoring occasions corresponding to the first SS set.

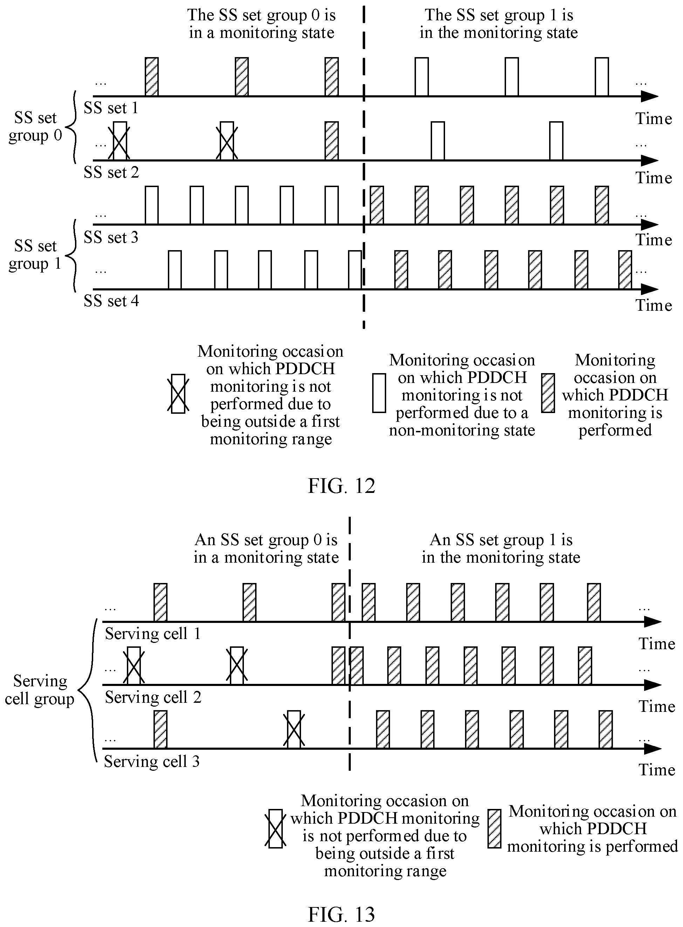

Refer to FIG. 12. When the terminal device performs PDCCH monitoring based on an SS set in an SS set group 0, in other words, the SS set group 0 is in a monitoring state, an SS set 1 in the SS set group 0 is a reference SS set, and a first monitoring range is a slot in which a monitoring occasion corresponding to the SS set 1 is located. In this case, in a process in which the terminal device performs PDCCH monitoring based on the SS set group 0, referring to FIG. 12, the terminal device performs PDCCH monitoring on the monitoring occasion corresponding to the SS set 1. For an SS set 2, when a monitoring occasion corresponding to the SS set 2 and the monitoring occasion corresponding to the SS set 1 are located in a same slot, the terminal device performs PDCCH monitoring based on the monitoring occasion corresponding to the SS set 2; otherwise, does not perform PDCCH monitoring, as shown in the monitoring occasion marked with "X" in the figure.

In this embodiment, after an SS set group switching condition is met (when effective time P is configured, after the SS set group switching condition is met and the effective time P is passed), the terminal device may switch a second SS set group to the monitoring state, and perform PDCCH monitoring based on the second SS set group. For the SS set group switching condition, refer to the SS set group switching condition used in a switching manner designed in the foregoing dynamic SS set group switching mechanism. Details are not described herein again.

According to the method provided in this embodiment of this application, in the dynamic SS set group switching mechanism, the terminal device may alternatively not perform PDCCH monitoring on some monitoring occasions corresponding to the SS set in the monitoring state, to improve flexibility of performing PDCCH monitoring by the terminal device, and overcome a power consumption waste caused by unaligned monitoring occasions corresponding to different SS sets.

The following describes a procedure of the communication method in a multi-carrier scenario. In the following embodiment, the terminal device has a plurality of serving cells, and the plurality of serving cells include a first serving cell and a second serving cell. For ease of description, in the following, a carrier corresponding to the first serving cell is referred to as a first carrier, and a BWP on the first carrier is referred to as a first BWP; and a carrier corresponding to the second serving cell is referred to as a second carrier, and a BWP on the second carrier is referred to as a second BWP.

S901: The network device sends configuration information to the terminal device. The configuration information may include but is not limited to the following information: SS set configuration information and SS set group information.

The SS set configuration information includes parameters corresponding to a plurality of SS sets configured for each BWP of each serving cell. For a parameter corresponding to any SS set, refer to the foregoing descriptions. Details are not described herein again.

The SS set group information is used to group the plurality of SS sets in each BWP of each serving cell. For SS set group information of any serving cell, refer to the descriptions of SS set group information in a single-carrier scenario. Details are not described herein again.

It should be noted that, in a scenario of cross-carrier scheduling (where, to be specific, DCI on a serving cell Cell 1 schedules a PDSCH/PUSCH of a serving cell Cell 2), in an SS set on a scheduling cell (scheduling cell, namely, a serving cell Cell 1) and an SS set on an associated scheduled cell (scheduled cell, a serving cell Cell 2), the SS sets with a same index should have a same SS set group identifier (in other words, have a same SS set group ID). For example, if an SS set index on the serving cell Cell 1 is 0, and an SS set index on the serving cell Cell 2 is also 0, an SS set 0 on the serving cell Cell 1 belongs to an SS set group 0, and an SS set 0 on the serving cell Cell 2 also belongs to the SS set group 0. This is because the terminal device monitors, on the serving cell Cell 1 based on the SS set, whether the serving cell Cell 2 is scheduled on the PDCCH. A PDCCH aggregation level and a PDCCH candidate are determined by using a parameter corresponding to the SS set of the serving cell Cell 2, and other parameters (for example, a PDCCH monitoring periodicity, an offset, duration, and a PDCCH monitoring pattern within a slot) are determined by using a parameter corresponding to the SS set on the serving cell Cell 1, in other words, the PDCCH monitoring occasion is still determined based on the SS set on the serving cell Cell 1. Therefore, it is required that the scheduling cell (the serving cell Cell 1) and the associated scheduled cell (the serving cell Cell 2) have a same SS set index, cross-carrier scheduling can be implemented. If the scheduling cell and the scheduled cell that have the same SS set index are configured in SS set groups with different IDs, for example, the SS set 0 on the serving cell Cell 1 belongs to the SS set group 0, and the SS set 0 on the serving cell Cell 2 belongs to the SS set group 1, when the terminal device monitors the SS set group 0, the network device cannot implement cross-carrier scheduling.

In an implementation, the configuration information may further include serving cell group information, and the serving cell group information is used to group a plurality of serving cells of the terminal device. A PCell in the plurality of serving cells may also participate in grouping, and may belong to one serving cell group with SCells. This is not limited in this application.

In an example, the serving cell group information may include a serving cell group identifier corresponding to a serving cell, to indicate a serving cell group to which the serving cell belongs. In another example, the serving cell group information may include a member list of each serving cell group. A member list of a first serving cell group may include identifiers of all serving cells of the first serving cell group.

It should be noted that when the network device does not configure the serving cell group information, one serving cell of the terminal device may be considered as one serving cell group. In this case, the solution provided in this embodiment of this application is still applicable.

In an implementation, the configuration information may further include effective time P. Optionally, the network device may respectively configure effective time P for each serving cell group, or respectively configure effective time P for each serving cell, or respectively configure effective time P for each BWP of each serving cell.

For a counting manner, a function, and a determining manner of the effective time, refer to the foregoing descriptions in the single-carrier scenario. Details are not described herein again.

In another implementation, the configuration information may further include a timer used for SS set group switching. Optionally, similar to the effective time P, the network device may respectively configure one timer for each serving cell group, or respectively configure one timer for each serving cell, or respectively configure one timer for each BWP of each serving cell.

A counting unit of the timer may be a slot, a second, a millisecond, or the like. For example, when the counting unit of the timer is the slot, in a process of performing SS set group switching on the active BWP of the first serving cell in the first serving cell group, the terminal device may perform counting based on a slot corresponding to a reference BWP, or perform counting based on a slot corresponding to the active BWP. The reference BWP may be a BWP with a smallest SCS in a plurality of BWPs of the first serving cell, or a BWP with a smallest SCS in a plurality of BWPs of all serving cells in the first serving cell group.

In still another implementation, the configuration information may further include a first indication. The first indication indicates the terminal device to skip PDCCH monitoring, in other words, indicates the terminal device not to perform PDCCH monitoring on some monitoring occasions (or not to perform PDCCH monitoring on monitoring occasions outside a first monitoring range), to reduce power consumption.

In this embodiment of this application, after S901, the terminal device may perform steps S902 and S903 for each serving cell group. The following uses a first serving cell group that includes a first serving cell and a second serving cell as an example for description. The first serving cell group may further include another serving cell.

S902: The terminal device determines a plurality of monitoring occasions corresponding to a first SS set in a first SS set group in an active BWP of the first serving cell, and determines a plurality of monitoring occasions corresponding to a second SS set in a second SS set group in an active BWP of the second serving cell.

The terminal device may determine, based on a configuration parameter corresponding to the first SS set, the plurality of monitoring occasions corresponding to the first SS set; and determine, based on a configuration parameter corresponding to the second SS set, the plurality of monitoring occasions corresponding to the second SS set.

S903: The terminal device determines a first monitoring range.

It should be noted that an execution sequence of S902 and S903 is not limited in this application. The terminal device may first perform S902 and then perform S903, or first perform S903 and then perform S902, or execution time of the two steps overlaps.

The terminal device may determine the first monitoring range in but not limited to the following manners.

Manner 1: The terminal device determines the first monitoring range based on a monitoring occasion corresponding to a reference SS set. For the manners of determining the first monitoring range, refer to the determining manners in the single-carrier scenario, for example, as shown in FIG. 11.

In Manner 1, the reference SS set may be determined by the terminal device, or may be determined by the network device and configured for the terminal device by using RRC signaling, or may be specified in a protocol or a standard. This is not limited in this application.

Optionally, the terminal device or the network device may determine the reference SS set in the following manner.

Manner A: The terminal device or the network device determines the reference SS set based on a configuration parameter corresponding to an SS set (briefly referred to as a first candidate SS set) that is in a monitoring state and that is in an active BWP of a reference serving cell in the first serving cell group, where the configuration parameter includes at least one of the following: a PDCCH monitoring periodicity, a PDCCH monitoring pattern within a slot, duration, and an SS set index.

Manner B: The terminal device or the network device uses, as the reference SS set, all SS sets that are in a monitoring state and that are in an active BWP of a reference serving cell in the first serving cell.

Manner C: The terminal device or the network device determines the reference SS set based on a configuration parameter corresponding to an SS set (briefly referred to as a second candidate SS set) that is in a monitoring state and that is in an active BWP of an active serving cell in the first serving cell group, where the configuration parameter includes at least one of the following: a PDCCH monitoring periodicity, a PDCCH monitoring pattern within a slot, duration, and an SS set index.

Both a process of determining the reference SS set based on the configuration parameter corresponding to the first candidate SS set in Manner A and a process of determining the reference SS set based on the parameter corresponding to the second candidate SS set in Manner C are the same as a process of determining the reference SS set based on the configuration parameters corresponding to the plurality of SS sets in the first SS set group in the single-carrier scenario. Therefore, mutual reference may be made, and details are not described herein again.

In addition, the reference serving cell in the foregoing Manner A and Manner B may be configured by the network device in various manners such as by using RRC signaling. For example, a new parameter (which may be referred to as a reference serving cell flag parameter) is introduced for a serving cell to indicate whether the serving cell is the reference serving cell. For another example, the network device sends second information to the terminal device, where the second information indicates a parameter serving cell. For example, the second information includes a serving cell index or identifier used for the reference cell.

The reference cell in the foregoing Manner A and Manner B may be determined by the terminal device in the first serving cell group in the following manners.

Manner a: The reference serving cell is determined based on a parameter of the active serving cell in the first serving cell group, and the parameter includes at least one of the following: an SCS of an active BWP of the serving cell and an index of the serving cell; or the parameter includes at least one of the following: SCSs of an active BWP and an inactive BWP (for example, all BWPs) of the serving cell, and an index of the serving cell.

For example, the reference serving cell may meet at least one of the following conditions:
in the active serving cell in the first serving cell group, a largest SCS of an active BWP of the reference serving cell;
in the active serving cell in the first serving cell group, a largest SCS of a BWP of the reference serving cell; and
in the active serving cell in the first serving cell group, a largest or smallest index of the reference serving cell.

Manner b: The reference serving cell is determined based on parameters of the active serving cell and an inactive serving cell in the first serving cell group, and the parameter includes at least one of the following: SCSs of an active BWP and an inactive BWP of the serving cell, and an index of the serving cell.

For example, the reference serving cell may meet at least one of the following conditions:
in all the serving cells in the first serving cell group, a largest SCS of a BWP of the reference serving cell; and
in all serving cells in the first serving cell group, a largest or smallest index of the reference serving cell.

Manner 2: The first monitoring range is determined by the network device and configured for the terminal device by using RRC signaling. Optionally, the network device may determine the first monitoring range by using the method for determining the first monitoring range by the terminal device recorded in Manner 1. Therefore, for same parts, refer to each other. Details are not described herein again.

Manner 3: The first monitoring range is specified in a protocol or a standard.

S903: The terminal device performs PDCCH monitoring based on the SS set in the first SS set group and the first monitoring range; and performs PDCCH monitoring based on the SS set in the second SS set group and the first monitoring range.

The terminal device performs PDCCH monitoring based on the SS set in the first SS set group and the first monitoring range. For a specific process, refer to the descriptions in S903 in the single-carrier scenario. Details are not described herein again.

The second SS set in the second SS set group is still used as an example for description. That the terminal device performs PDCCH monitoring based on the SS set in the second SS set group and the first monitoring range includes: When a third monitoring occasion corresponding to the second SS set is outside the first monitoring range, the terminal device determines not to perform PDCCH monitoring on the third monitoring occasion. When a fourth monitoring occasion corresponding to the second SS set is within the first monitoring range, the terminal device performs PDCCH monitoring on the fourth monitoring occasion, where the third monitoring occasion is included in the plurality of monitoring occasions corresponding to the second SS set, and the fourth monitoring occasion is included in the plurality of monitoring occasions corresponding to the second SS set.

Refer to FIG. 13. A serving cell group includes three serving cells, and there are two SS set groups in an active BWP of each serving cell. The terminal device separately performs PDCCH monitoring in each serving cell based on the SS set groups. It is assumed that a serving cell 1 is a reference serving cell, an SS set in a monitoring state in the active BWP of the reference serving cell is a reference SS set, and the first monitoring range is a slot in which a monitoring occasion corresponding to the reference SS set is located. In this case, for the serving cell 1, the terminal device performs PDCCH monitoring based on an SS set in the SS set group 0 in the active BWP of the serving cell 1. For the serving cell 2, if a PDCCH monitoring occasion (briefly referred to as a monitoring occasion 2) corresponding to an SS set in the SS set group 0 in the active BWP of the serving cell 2 and a monitoring occasion (briefly referred to as a monitoring occasion 1) corresponding to the SS set in the SS set group in the active BWP of the serving cell 1 are in a same slot, the terminal device may perform PDCCH monitoring on the monitoring occasion 2; otherwise, does not need to perform PDCCH monitoring, as shown in the monitoring occasion marked with "X" in the figure. The serving cell 3 has a same case as the serving cell 2. Details are not described again.

In this embodiment, after an SS set group switching condition is met (when effective time P is configured, after a switching condition is met and the effective time P is passed), the terminal device may switch a third SS set group in an active BWP of a first serving cell to a monitoring state, and perform PDCCH monitoring based on the third SS set group.

The SS set group switching condition includes an SS set group switching condition used in a switching manner designed in the foregoing dynamic SS set group switching mechanism. Details are not described herein again.

In addition, the SS set group switching condition may further include: receiving a second indication from the network device, and performing PDCCH monitoring based on the third SS set group in the active BWP of the first serving cell and the second indication, to implement SS set group switching on the active BWP of the first serving cell.

In an implementation, the second indication indicates the terminal device to perform SS set group switching on an active BWP of a serving cell in which the DCI is located; and the DCI carries the second indication, and the first serving cell is a serving cell (namely, a scheduling cell) in which the DCI is located.

In another implementation, the second indication indicates the terminal device to perform SS set group switching on an active BWP of a serving cell in which a PDSCH or a PUSCH scheduled by using DCI is located; and the DCI carries the second indication, and the first serving cell is a serving cell (namely, a scheduled cell) in which a PDSCH or a PUSCH scheduled by using a DCI is located.

In still another implementation, the second indication indicates the terminal device to perform SS set group switching on an active BWP of a serving cell group in which the DCI is located; and the DCI carries the second indication, and the first serving cell group is the serving cell group in which the DCI is located.

In still another implementation, the second indication indicates the terminal device to perform SS set group switching on an active BWP of a serving cell group in which a PDSCH or a PUSCH scheduled by using the DCI is located; and the DCI carries the second indication, and the first serving cell group is the serving cell group in which the PDSCH or the PUSCH scheduled by using the DCI is located.

In yet another implementation, the second indication includes at least one field, and each field corresponds to one serving cell; and each field indicates the terminal device to perform SS set group switching on an active BWP of the corresponding serving cell.

In yet another implementation, the second indication includes at least one field, and each field corresponds to one serving cell group; and each field indicates the terminal device to perform SS set group switching on an active BWP of the corresponding serving cell group.

In the foregoing implementations, flexibility of indicating, by the network device, to perform SS set group switching can be improved.

For example, the network device may indicate SS set group switching by using DCI in a DCI format dedicated to the terminal device, for example, in a DCI format 0_1 or a DCI format 1_1.

Example 1: One bit is newly added to the DCI to indicate SS set group switching on the scheduling cell. For example, if a value of the bit is "0", it indicates that PDCCH monitoring is performed on the scheduling cell based on the SS sets in the SS set group 0. If a value of the bit is "1", it indicates that PDCCH monitoring is performed on the scheduling cell based on the SS sets in the SS set group 1. For another example, a value of the bit indicates the SS set group switching on the scheduled cell.

It should be noted that, if there are more than two SS set groups in the BWP of the serving cell, a field with more bits may be added to the DCI, so that different values of the field can traverse all SS set groups.

Example 2: In a multi-carrier scenario, to more flexibly indicate serving cells on which SS set group switching may be performed, more bits may be used for indication. For example, a plurality of fields are added to the DCI, and each field corresponds to one serving cell, to indicate SS set group switching on the serving cell. In this case, N serving cells correspond to N fields. This indication signaling has relatively high overheads.

Example 3: To reduce signaling overheads in the DCI, a plurality of fields are added to the DCI, and each field corresponds to one serving cell group, to indicate SS set group switching on a serving cell in the serving cell group.

Similar to Example 1, in Example 2 and Example 3, when there are two SS set groups in a BWP, one field may include one bit. When there are more than two SS set groups in the BWP, one field may include a plurality of bits.

Example 4: If the terminal device has both an SCell dormancy capability and an SS set group switching capability, the network device may indicate, by using RRC signaling, that a secondary cell dormancy indication (SCell dormancy indication) field in DCI in a DCI format 0-1/1-1 is used for SS set group switching or SCell dormancy. When the network device configures the secondary cell dormancy indication field in the DCI to be used for the SS set group switching, the terminal device may perform SS set group switching based on a value of the secondary cell dormancy indication field in the DCI.

Example 5: If the terminal device has both an SCell dormancy capability and an SS set group switching capability, the network device may indicate, by using RRC signaling, that when all bits in a frequency domain resource assignment (frequency domain resource assignment) field in DCI in a DCI format 1_1 are set to 0 (when a resource allocation manner resourceAllocation is type 0) or 1 (when a resource allocation manner resourceAllocation is type 1) or 0 or 1 (when a resource allocation manner is dynamically switched), at least one of the following items in the DCI indicates SS set group switching or SCell dormancy:
a modulation and coding scheme (Modulation and coding scheme of transport block 1) of transport block 1 field;
a new data indicator of transport block 1 (New data indicator of transport block 1) field;
a redundancy version of transport block 1 (Redundancy version of transport block 1) field;
a HARQ process number (HARQ process number) field;
an antenna port (Antenna port(s)) field; and
a DMRS sequence initialization (DMRS sequence initialization) field.

When the network device configures the foregoing field in the DCI to be used for the SS set group switching, the terminal device may perform SS set group switching based on a value of the secondary cell dormancy indication field in the DCI.

According to the method provided in this embodiment of this application, in the dynamic SS set group switching mechanism, the terminal device may alternatively not perform PDCCH monitoring on some monitoring occasions corresponding to the SS set in the monitoring state, to improve flexibility of performing PDCCH monitoring by the terminal device, and overcome a power consumption waste caused by unaligned monitoring occasions corresponding to different SS sets.

It can be learned from the foregoing descriptions of the PDCCH skipping monitoring mechanism in Solution 4 and FIG. 6 that a time window in which PDCCH monitoring is not performed in the mechanism is relatively short, and the time window is "only one-shot (one-shot)". In other words, after the time window ends, the terminal device resumes the normal PDCCH monitoring. When the terminal device does not transmit a service for a long time, the network device may send a plurality of pieces of skip PDCCH monitoring signaling to the terminal device; otherwise, the terminal device still frequently performs PDCCH monitoring after a short period of time, resulting in unnecessary power consumption. Therefore, this mechanism causes relatively high signaling overheads in a communication system or the unnecessary power consumption of the terminal device.

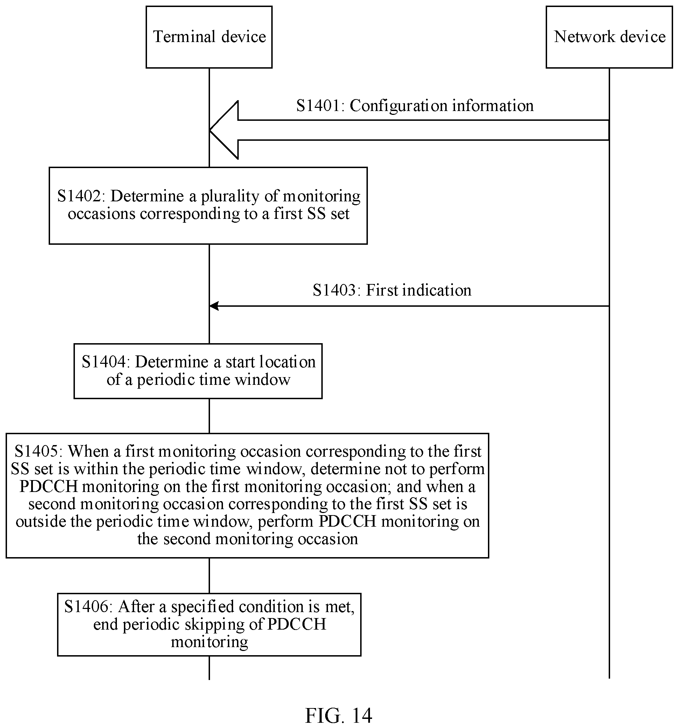

This application further provides another communication method, to resolve the foregoing problem, improve flexibility of performing PDCCH monitoring by a terminal device, and reduce power consumption of a key device. It should be noted that the method is implemented based on the foregoing PDCCH skipping monitoring mechanism. The method may be applied to the communication system shown in FIG. 2. The following describes, with reference to a flowchart shown in FIG. 14, the method provided in this embodiment of this application.

S1401: The network device sends configuration information to the terminal device. The configuration information may include but is not limited to configuration information of an SS set.

The configuration information may be carried in one or more pieces of RRC signaling.

For the configuration information of the SS set in a single-carrier scenario and the configuration information of the SS set in a multi-carrier scenario, respectively refer to the descriptions of S901 in the embodiment shown in FIG. 9. Details are not described herein again.

Certainly, in the multi-carrier scenario, the configuration information may further include serving cell group information, so that the terminal device may group a plurality of serving cells including a PCell. For the serving cell group information, refer to the descriptions of the serving cell group information in the foregoing embodiment. Alternatively, the plurality of serving cells may be grouped in another manner. This is not limited in this application.

Subsequently, the terminal device may perform subsequent steps on monitoring occasions corresponding to an SS set in an active BWP of a serving cell. For ease of description, only monitoring occasions corresponding to a first SS set in an active BWP of a first serving cell are used as an example for description in subsequent steps.

S1402: The terminal device determines a plurality of monitoring occasions corresponding to the first SS set. The terminal device may determine, based on a configuration parameter of the first SS set, the monitoring occasions corresponding to the first SS set. For a specific process, refer to FIG. 1A or FIG. 1B. Details are not described herein again.

S 1403: The terminal device receives a first indication from the network device, where the first indication indicates a periodic time window for the terminal device to skip PDCCH monitoring.

In this embodiment of this application, the skipping PDCCH monitoring may also be expressed as not performing PDCCH monitoring or stopping PDCCH monitoring.

The first indication may be skip PDCCH monitoring signaling (skip PDCCH monitoring signaling) carried on a PDCCH. It should be noted that, in the multi-carrier scenario, the first indication may indicate a target serving cell or a target serving cell group in which the PDCCH monitoring is skipped; or may indicate an active BWP in which the PDCCH monitoring is skipped. Certainly, the network device may alternatively send another indication, to indicate a target serving cell, a target serving cell group, or an active BWP in which the PDCCH monitoring is skipped. This is not limited in this application.

Optionally, when a DRX mechanism is introduced into the communication system, the first indication may specifically indicate a periodic time window for the terminal device to skip PDCCH monitoring in DRX active time (active time). For details about the DRX active time, refer to the foregoing descriptions.

The periodic time window specifically means that a time window in which the PDCCH monitoring (also referred to as PDCCH skipping duration) is stopped is periodic. In other words, after receiving the first indication from the network device, the terminal device periodically stops the PDCCH monitoring within the PDCCH skipping duration.

In an implementation, the first indication may carry information about the periodic time window. Alternatively, the information about the periodic time window is pre-agreed on by the network device and the terminal device.

In another implementation, the configuration information sent by the network device in S1401 further includes information about at least one candidate periodic time window, or information about at least one candidate periodic time window pre-agreed on by the network device and the terminal device. Then, the first indication includes indication information of the periodic time window, and the terminal device may determine the information about the periodic time window from the information about the at least one candidate periodic time window based on the indication information of the periodic time window.

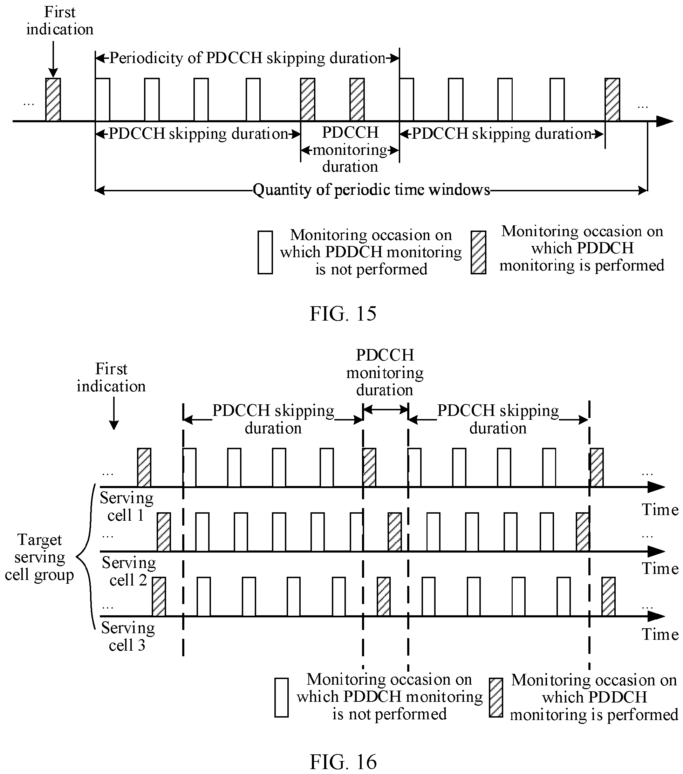

For example, information about any periodic time window indicates a periodic pattern. Refer to FIG. 15. The periodic pattern includes two parts: PDCCH skipping duration (PDCCH skipping duration) and PDCCH monitoring duration (PDCCH monitoring duration). In the foregoing embodiment, the information about the periodic time window may include duration of the PDCCH skipping duration, a quantity of the periodic time windows (or duration), and a periodicity of the PDCCH skipping duration.

The PDCCH skipping duration in the periodic pattern is the periodic time window.

It should be noted that, in a periodic pattern, the PDCCH skipping duration and the PDCCH monitoring duration are alternately deployed. In addition, in a periodic pattern, there may be one or more PDCCH skipping duration and one or more PDCCH monitoring duration. This is not limited in this application.

Optionally, a counting unit of the PDCCH skipping duration may be a millisecond, a second, a frame, a subframe, a slot, a symbol, or the like. Similarly, a counting unit of the PDCCH monitoring duration may also be a millisecond, a second, a frame, a subframe, a slot, a symbol, or the like. In FIG. 15, an example in which the counting unit is the slot is used.

S1404: The terminal device determines a start location of the periodic time window based on a symbol or a slot on/in which the first indication is located.

The symbol or the slot on/in which the first indication is located is offset by specified duration from the start location of the periodic time window. In other words, the specified duration is duration required for the first indication to take effect, and is briefly referred to as effective duration of the first indication. The start location of the periodic time window is a symbol or a slot in which the symbol or the slot on/in which the first indication is located is offset by the specified duration.

Optionally, the effective duration may be X symbols or slots, where X is greater than or equal to 1.

Optionally, the specified duration may be carried in the first indication, or information (for example, DCI) carrying the first indication, or the configuration information in S1401. This is not limited in this application. In a case in which the specified duration is determined by the network device, for a specific process, refer to FIG. 10. Details are not described herein again.

Optionally, if the DCI carrying the first indication further schedules a PDSCH, the effective duration may be a slot offset value of a HARQ-ACK corresponding to the PDSCH, and the start location of the periodic time window is a slot in which the HARQ-ACK corresponding to the PDSCH is located. If the DCI carrying the first indication further schedules a PUSCH, the effective duration may be a slot offset value of the PUSCH, and the start location of the periodic time window is a slot in which the PUSCH is located.

S1405: The terminal device periodically skips the PDCCH monitoring based on the first SS set and the periodic time window. Refer to FIG. 15. The following steps are specifically included:
when a first monitoring occasion corresponding to the first SS set is within the periodic time window, determining not to perform PDCCH monitoring on the first monitoring occasion; and when a second monitoring occasion corresponding to the first SS set is outside the periodic time window, performing PDCCH monitoring on the second monitoring occasion, where the first monitoring occasion and the second monitoring occasion are included in the plurality of monitoring occasions corresponding to the first SS set.

As shown in FIG. 15, after receiving a first indication, the terminal device does not perform PDCCH monitoring within the PDCCH skipping duration (PDCCH skipping duration). After the PDCCH skipping duration ends, the terminal device resumes the PDCCH monitoring, and duration during which the PDCCH monitoring is performed is one PDCCH monitoring duration (for example, two slots shown in the figure). Then, the terminal device enters the PDCCH skipping duration again, so that the network device does not need to send the first indication (skip PDCCH monitoring signaling) again after each PDCCH skipping duration.

In the multi-carrier scenario, as shown in FIG. 16, after receiving a first indication, the terminal device does not perform PDCCH monitoring within the PDCCH skipping duration (PDCCH skipping duration) in an active serving cell in a target serving cell group. After the PDCCH skipping duration ends, the terminal device resumes the PDCCH monitoring, and duration during which the PDCCH monitoring is performed is one PDCCH monitoring duration (for example, one slot shown in the figure). Then, the terminal device enters the PDCCH skipping duration again, so that the network device does not need to send the first indication again after each PDCCH skipping duration.

It should be noted that, in a multi-carrier scenario, because SCSs of different serving cells are different, absolute duration corresponding to slots corresponding to different serving cells is different. Consequently, the PDCCH skipping duration (optionally further including the PDCCH monitoring duration) may be defined as absolute duration (where, to be specific, a counting unit is a second, a millisecond, or the like), or defined as a quantity of slots corresponding to a reference serving cell, or a quantity of slots corresponding to a reference SCS.

For a manner of determining the reference serving cell, refer to the method provided in the embodiment shown in FIG. 9. The reference SCS may be a smallest SCS in SCSs of all BWPs configured for all serving cells (or active serving cells) in a target serving cell group, or a smallest SCS in SCSs of active BWPs of all serving cells (or active serving cells) in a target serving cell group.

S1406: After a specified condition is met, the terminal device ends periodic skipping of the PDCCH monitoring, and then resumes the normal PDCCH monitoring.

In an implementation, the specified condition is that the terminal device receives a second indication from the network device, where the second indication indicates that the periodic time window is invalid (in other words, indicates the terminal device to ignore or terminate the periodic time window). Optionally, the terminal device may receive the second indication from the network device in the periodic time window in a process of performing S 1405.

For example, the network device may use DCI to carry the second indication. A format of the DCI may be a DCI format dedicated to the terminal device, for example, a DCI format 0-0/0-1/0-2 or a DCI format 1-0/1-1/1-2. The DCI format may alternatively be a group common DCI format, for example, a DCI format 2-6.

In another implementation, when the first indication further indicates duration of the periodic time window, or the terminal device further receives a third indication, and the third indication indicates duration of the periodic time window, the specified condition is that duration elapses from a start location of the periodic time window after the first indication is received. In other words, the terminal device completes the skipping of the PDCCH monitoring in the periodic time window of the duration.

Optionally, in this embodiment of this application, the terminal device may further receive a fourth indication from the network device, where the fourth indication indicates an only one-shot ("one-shot") time window for the terminal device to skip PDCCH monitoring. The fourth indication may be skip PDCCH monitoring signaling carried on a PDCCH.

Specifically, the configuration information sent by the network device in S1401 further includes information about at least one candidate "one-shot" time window, or information about at least one candidate "one-shot" time window pre-agreed on by the network device and the terminal device. Then, the first indication includes indication information of the "one-shot" time window, and the terminal device may determine information about the "one-shot" time window from the information about the at least one candidate "one-shot" time window based on the indication information of the "one-shot" time window. After receiving the fourth indication, the terminal device stops the PDCCH monitoring in the "one-shot" time window, and does not periodically stop the PDCCH monitoring.

According to the method provided in this embodiment of this application, in the PDCCH skipping monitoring mechanism, the terminal device may periodically skip the PDCCH monitoring based on the periodic time window, to improve flexibility of performing PDCCH monitoring by the terminal device, overcome a power consumption waste caused by unaligned monitoring occasions corresponding to different SS sets, and also reduce signaling overheads.

It should be noted that the solutions in embodiments of this application may be applied to some types of SS sets, for example, only a USS, or a USS and a Type3-PDCCH CSS.

In addition, in the solutions provided in embodiments of this application, the non-monitored PDCCH may be a PDCCH scrambled by using a dedicated radio network cell temporary identifier (radio network temporary identifier, RNTI) of the terminal device. The dedicated RNTIs may include at least one of the following: a cell -RNTI (cell-RNTI, C-RNTI), a modulation and coding scheme C-RNTI (modulation and coding scheme C-RNTI, MCS-C-RNTI), a semi-persistent CSI-RNTI (Semi-Persistent CSI-RNTI, SP-CSI-RNTI), a configured scheduling RNTI (Configured Scheduling RNTI, CS-RNTI), a sidelink RNTI (Sidelink RNTI, SL-RNTI), and a sidelink configured scheduling RNTI (Sidelink Configured Scheduling RNTI, SL-CS-RNTI).

Because the dedicated RNTIs except the SP-CSI-RNTI are mainly used to schedule user data, and are all used for unicast transmission (namely, service transmission), and a PDCCH scrambled by using these RNTIs is not monitored, the terminal device may stop the PDCCH monitoring when no service is transmitted, so that power consumption of the terminal device is reduced without affecting a service scheduling delay. The SP-CSI-RNTI is used to trigger semi-persistent CSI reporting, and is also used to schedule a PUSCH for semi-persistent CSI reporting.

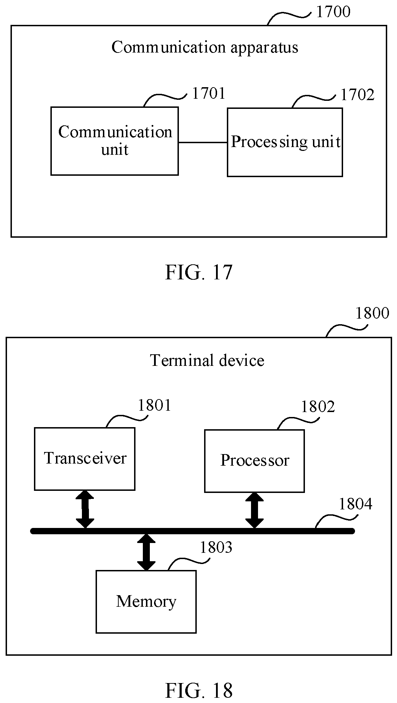

Based on the communication methods and embodiments provided in the foregoing embodiments, an embodiment of this application further provides a communication apparatus. The apparatus is applied to the terminal device in the communication system shown in FIG. 2, and has a function of implementing the methods provided in the foregoing embodiments. Refer to FIG. 17. The communication apparatus 1700 includes a communication unit 1701 and a processing unit 1702.

The communication unit 1701 is configured to receive and send a signal, and may include radio frequency devices such as a receiver and a transmitter, and an antenna. In this embodiment of this application, the communication unit 1701 is configured to: perform PDCCH monitoring, receive configuration information, signaling, an indication, and the like that are sent by a network device, and may further receive and send service data.

When the communication apparatus 1700 is configured to implement the communication method provided in the embodiment shown in FIG. 9, the processing unit 1702 is specifically configured to perform S902 to S904. When the communication apparatus 1700 is configured to implement the communication method provided in the embodiment shown in FIG. 14, the processing unit 1702 is specifically configured to perform S1402 and S1404 to S1406. For a specific function of the processing unit 1702, refer to the specific descriptions in the foregoing embodiments. Details are not described herein again.

It should be noted that, in the foregoing embodiments of this application, division into modules is an example, and is merely logical function division. During actual implementation, there may be another division. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the computer software product is stored in a storage medium and includes several instructions for indicating a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, this application further provides a terminal device. The terminal device is used in the communication system shown in FIG. 2, can implement the communication method according to the foregoing embodiment, and has a function of the communication apparatus 1700 shown in FIG. 17. Refer to FIG. 18. The communication device 1800 includes: a transceiver 1801, a processor 1802, and a memory 1803. The transceiver 1801, the processor 1802, and the memory 1803 are connected to each other.

Optionally, the transceiver 1801, the processor 1802, and the memory 1803 are connected to each other via a bus 1804. The bus 1804 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, only one thick line is used to represent the bus in FIG. 18, but this does not mean that there is only one bus or only one type of bus.

The transceiver 1801 is configured to receive and send a signal to communicate and interact with another device. The transceiver 1801 may include radio frequency devices such as a receiver and a transmitter, and an antenna. In this embodiment of this application, the transceiver 1801 is configured to: perform PDCCH monitoring, receive configuration information, signaling, an indication, and the like that are sent by a network device, and may further receive and send service data.

When the terminal device 1800 is configured to implement the communication method provided in the embodiment shown in FIG. 9, the processor 1802 is specifically configured to perform S902 to S904. When the terminal device 1800 is configured to implement the communication method provided in the embodiment shown in FIG. 14, the processor 1802 is specifically configured to perform S1402 and S1404 to S1406. For a specific function of the processor 1802, refer to the specific descriptions in the foregoing embodiments. Details are not described herein again.

The memory 1803 is configured to store program instructions, data, and the like. Specifically, the program instructions may include program code. The program code includes computer operation instructions. The memory 1803 may include a random access memory (random access memory, RAM), or may include a non-volatile memory (non-volatile memory), for example, at least one magnetic disk memory. The processor 1802 executes the program instructions stored in the memory 1803, and uses the data stored in the memory 1803, to implement the foregoing functions, to implement the communication method according to the foregoing embodiment.

It may be understood that the memory 1803 in FIG. 18 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache.

Based on the foregoing embodiment, an embodiment of this application provides a communication system. The communication system includes a terminal device and a network device. The terminal device is configured to implement the communication method shown in FIG. 9 or FIG. 14.

Based on the foregoing embodiment, an embodiment of this application further provides a computer program. When the computer program is run on a computer, the computer is enabled to perform the communication method according to the foregoing embodiment.

Based on the foregoing embodiments, an embodiment of this application further provides a computer-readable storage medium. The computer-readable storage medium stores a computer program. When the computer program is executed by a computer, the computer is enabled to perform the communication method according to the foregoing embodiment.

The storage medium may be any available medium that can be accessed by the computer. By way of example, and not limitation, the computer-readable medium may include a RAM, a ROM, an EEPROM, a CD-ROM or another compact disc storage, a magnetic disk storage medium or another magnetic storage device, or any other medium that can be used to carry or store expected program code in a form of instructions or a data structure and can be accessed by the computer.

Based on the foregoing embodiment, an embodiment of this application further provides a chip. The chip is configured to read a computer program stored in a memory, to implement the communication method according to the foregoing embodiment.

Based on the foregoing embodiment, an embodiment of this application provides a chip system. The chip system includes a processor, configured to support a computer apparatus in implementing functions of the terminal device or the network device in the foregoing embodiments. In a possible design, the chip system further includes a memory, and the memory is configured to store a program and data that are necessary for the computer apparatus. The chip system may include a chip, or may include a chip and another discrete device.

In conclusion, this application provides a communication method and apparatus, to improve flexibility of performing PDCCH monitoring by a terminal device, and reduce power consumption of the terminal device. According to the method, in a dynamic SS set group switching mechanism, the terminal device may alternatively not perform PDCCH monitoring on some monitoring occasions corresponding to an SS set in a monitoring state, to improve flexibility of performing PDCCH monitoring by the terminal device, and overcome power consumption waste caused by unaligned monitoring occasions corresponding to different SS sets.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, and an optical memory) that include a computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the protection scope of this application. In this way, if these modifications and variations to this application fall within the scope of the claims of this application and their equivalent technologies, this application is also intended to cover these modifications and variations.

## Claims

1. A communication method, applied to a terminal device, and comprising:
determining a plurality of monitoring occasions corresponding to a first SS set in a first SS set group in an active BWP of a first serving cell, wherein the plurality of monitoring occasions corresponding to the first SS set are used by the terminal device to perform PDCCH monitoring;
when a first monitoring occasion corresponding to the first SS set is outside a first monitoring range, determining not to perform PDCCH monitoring on the first monitoring occasion; and
when a second monitoring occasion corresponding to the first SS set is within the first monitoring range, performing PDCCH monitoring on the second monitoring occasion, wherein
the first monitoring occasion is comprised in the plurality of monitoring occasions corresponding to the first SS set, and the second monitoring occasion is comprised in the plurality of monitoring occasions corresponding to the first SS set.

2. The method according to claim 1, wherein the method further comprises:
determining the first monitoring range based on a monitoring occasion corresponding to a reference SS set.

3. The method according to claim 2, wherein the reference SS set is configured by a network device.

4. The method according to claim 2, wherein when the first SS set group comprises a plurality of SS sets, the plurality of SS sets comprise the first SS set; and the reference SS set is determined based on configuration parameters corresponding to the plurality of SS sets, and the configuration parameter comprises at least one of the following: a PDCCH monitoring periodicity, a PDCCH monitoring pattern within a slot, duration, and an SS set index; or
when the first serving cell belongs to a first serving cell group, the reference SS set is determined based on a configuration parameter corresponding to an SS set that is in a monitoring state and that is in an active BWP of a reference serving cell in the first serving cell group, and the configuration parameter comprises at least one of the following: a PDCCH monitoring periodicity, a PDCCH monitoring pattern within a slot, duration, and an SS set index; or
when the first serving cell belongs to a first serving cell group, the reference SS set is all SS sets that are in a monitoring state and that are in an active BWP of a reference serving cell in the first serving cell; or
when the first serving cell belongs to a first serving cell group, the reference SS set is determined based on a configuration parameter corresponding to an SS set that is in a monitoring state and that is in an active BWP of an active serving cell in the first serving cell group, and the configuration parameter comprises at least one of the following: a PDCCH monitoring periodicity, a PDCCH monitoring pattern within a slot, duration, and an SS set index;

5. The method according to claim 4, wherein the reference serving cell is configured by a network device.

6. The method according to claim 4, wherein the reference serving cell is determined based on a parameter of the active serving cell in the first serving cell group, and the parameter comprises at least one of the following: a subcarrier spacing SCS of an active BWP of the serving cell and an index of the serving cell; or the parameter comprises at least one of the following: SCSs of an active BWP and an inactive BWP of the serving cell, and an index of the serving cell; or
the reference serving cell is determined based on parameters of the active serving cell and an inactive serving cell in the first serving cell group, and the parameter comprises at least one of the following: SCSs of an active BWP and an inactive BWP of the serving cell, and an index of the serving cell.

7. The method according to any one of claims 2 to 6, wherein the first monitoring range is:
a symbol on which the monitoring occasion corresponding to the reference SS set is located; or
a slot in which the monitoring occasion corresponding to the reference SS set is located; or
a symbol on which the monitoring occasion corresponding to the reference SS set is located and a first specified quantity of adjacent symbols; or
a slot in which the monitoring occasion corresponding to the reference SS set is located and a second specified quantity of adjacent slots; or
a symbol on which the monitoring occasion corresponding to the reference SS set is located and adjacent first specified duration; or
a slot in which the monitoring occasion corresponding to the reference SS set is located and adjacent second specified duration.

8. The method according to any one of claims 1 to 7, wherein when the first serving cell belongs to the first serving cell group, and the first serving cell group further comprises a second serving cell, the method further comprises:
determining a plurality of monitoring occasions corresponding to a second SS set in a second SS set group in an active BWP of the second serving cell, wherein the plurality of monitoring occasions corresponding to the second SS set are used by the terminal device to perform PDCCH monitoring;
when a third monitoring occasion corresponding to the second SS set is outside the first monitoring range, determining not to perform PDCCH monitoring on the third monitoring occasion; and
when a fourth monitoring occasion corresponding to the second SS set is within the first monitoring range, performing PDCCH monitoring on the fourth monitoring occasion, wherein
the third monitoring occasion is comprised in the plurality of monitoring occasions corresponding to the second SS set, and the fourth monitoring occasion is comprised in the plurality of monitoring occasions corresponding to the second SS set.

9. The method according to any one of claims 1 to 8, wherein the method further comprises:
receiving a first indication from the network device, wherein the first indication indicates not to perform PDCCH monitoring on the first monitoring occasion.

10. The method according to any one of claims 1 to 9, wherein the method further comprises:
receiving a second indication from the network device, and performing PDCCH monitoring based on the second indication and a third SS set group, wherein
the second indication indicates the terminal device to perform SS set group switching on an active BWP of a serving cell in which DCI is located; and the DCI carries the second indication, and the first serving cell is the serving cell in which the DCI is located; or
the second indication indicates the terminal device to perform SS set group switching on an active BWP of a serving cell in which a PDSCH or a PUSCH scheduled by using DCI is located; and the DCI carries the second indication, and the first serving cell is the serving cell in which the PDSCH or the PUSCH scheduled by using the DCI is located; or
when the first serving cell belongs to the first serving cell group, the second indication indicates the terminal device to perform SS set group switching on an active BWP of a serving cell group in which DCI is located; and the DCI carries the second indication, and the first serving cell group is the serving cell group in which the DCI is located; or
when the first serving cell belongs to the first serving cell group, the second indication indicates the terminal device to perform SS set group switching on an active BWP of a serving cell group in which a PDSCH or a PUSCH scheduled by using DCI is located; and the DCI carries the second indication, and the first serving cell group is the serving cell group in which the PDSCH or the PUSCH scheduled by using the DCI is located; or
the second indication comprises at least one field, and each field corresponds to one serving cell; and each field indicates the terminal device to perform SS set group switching on an active BWP of the corresponding serving cell; or
the second indication comprises at least one field, and each field corresponds to one serving cell group; and each field indicates the terminal device to perform SS set group switching on an active BWP of the corresponding serving cell group.

11. The method according to any one of claims 1 to 10, wherein the first SS set is a user-specific search space set USS; or the first SS set is a user-specific search space set USS or a Type3-PDCCH common search space set CSS.

12. The method according to any one of claims 1 to 11, wherein a non-monitored PDCCH is a PDCCH scrambled by using a dedicated radio network temporary identifier RNTI of the terminal device.

13. A communication method, applied to a terminal device, and comprising:
determining a plurality of monitoring occasions corresponding to a first SS set;
receiving a first indication from a network device, wherein the first indication indicates a periodic time window for the terminal device to skip PDCCH monitoring;
determining a start location of the periodic time window based on a symbol or a slot on/in which the first indication is located;
when a first monitoring occasion corresponding to the first SS set is within the periodic time window, determining not to perform PDCCH monitoring on the first monitoring occasion; and
when a second monitoring occasion corresponding to the first SS set is outside the periodic time window, performing PDCCH monitoring on the second monitoring occasion, wherein
the first monitoring occasion and the second monitoring occasion are comprised in the plurality of monitoring occasions corresponding to the first SS set.

14. The method according to claim 13, wherein the first indication further indicates a quantity of the periodic time windows.

15. The method according to claim 13 or 14, wherein the method further comprises:
receiving a second indication from the network device, wherein the second indication indicates that the periodic time window is invalid; or
receiving a third indication from the network device, wherein the third indication indicates a quantity of the periodic time windows.

16. The method according to any one of claims 13 to 15, wherein the first indication further indicates a serving cell or a serving cell group in which the PDCCH monitoring is skipped; or
the first indication further indicates an active BWP in which the PDCCH monitoring is skipped.

17. The method according to any one of claims 13 to 16, wherein the start location of the periodic time window is offset by specified duration from a location of the symbol or the slot on/in which the first indication is located.

18. The method according to any one of claims 13 to 17, wherein the first SS set is a user-specific search space set USS; or the first SS set is a user-specific search space set USS or a Type3-PDCCH common search space set CSS.

19. The method according to any one of claims 1 to 18, wherein a non-monitored PDCCH is a PDCCH scrambled by using a dedicated radio network temporary identifier RNTI of the terminal device.

20. A communication apparatus, used in a terminal device, and comprising:
a communication unit, configured to receive and send a signal; and
a processing unit, configured to perform the method according to any one of claims 1 to 19 by using the communication unit.

21. A terminal device, comprising:
a transceiver, configured to receive and send a signal;
a memory, configured to store a computer program; and
a processor, configured to: execute the computer program stored in the memory, and implement the method according to any one of claims 1 to 19 by using the transceiver.

22. A computer storage medium, wherein the computer storage medium stores a computer program, and when the computer program is executed by a computer, the computer is enabled to perform the method according to any one of claims 1 to 19.

23. A computer program, wherein when the computer program is run on a computer, the computer is enabled to perform the method according to any one of claims 1 to 19.

24. A chip, wherein the chip is configured to read a computer program stored in a memory, to perform the method according to any one of claims 1 to 19.
